(19) Europäisches Patentamt
European Patent Office
Office européen des brevets

(11) EP 0 493 130 B1

(12) EUROPEAN PATENT SPECIFICATION

(45) Date of publication and mention of the grant of the patent:
**11.06.1997 Bulletin 1997/24**

(51) Int Cl.$^6$: **H04N 1/41**, H04N 7/30, G06T 9/00

(21) Application number: **91312057.2**

(22) Date of filing: **27.12.1991**

(54) **Image encoding apparatus optimizing the amount of generated code**

Bildcodierungsgerät mit Optimierung der erzeugten Codemenge

Appareil pour codage d'images optimisant la quantité du code généré

(84) Designated Contracting States:
**DE ES FR GB IT NL**

(30) Priority:
**28.12.1990 JP 408947/90**
**15.04.1991 JP 82401/91**
**15.04.1991 JP 82402/91**
**17.04.1991 JP 85386/91**

(43) Date of publication of application:
**01.07.1992 Bulletin 1992/27**

(60) Divisional application: **96203076.3**

(73) Proprietor: **CANON KABUSHIKI KAISHA**
**Tokyo (JP)**

(72) Inventors:
- **Enari, Masahiko, c/o Canon Kabushiki Kaisha Ohta-ku, Tokyo (JP)**
- **Hoshi, Nobuhiro, c/o Canon Kabushiki Kaisha Ohta-ku, Tokyo (JP)**
- **Takizawa, Hiroshi, c/o Canon Kabushiki Kaisha Ohta-ku, Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 267 579**
**EP-A- 0 447 247**
**EP-A- 0 469 835**
**EP-A- 0 469 852**
**US-A- 4 922 273**
**US-A- 4 982 282**
**US-A- 4 984 076**

- **IEEE Transactions On Communications Vol. COM-32, No. 3, March 1984, pp. 280-287, "An Interframe Coding System for Video Teleconferencing Signal Transmission at a 1.5 Mbit/s Rate".**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to an image processing apparatus, and, more particularly to an image processing apparatus for compressing a digital image and transmitting compressed data to a transmission path or a storage medium.

Fig. 7 illustrates a conventional image encoding apparatus in which image data received at a terminal 101 is analog-to-digital (hereinafter abbreviated to "A/D") converted in an A/D converter 102 before it is formed into a variable-length compressed code in an encoding unit 103. Then the variable-length compressed code is temporarily stored in a transmission buffer memory 104 before it is transmitted to a transmission path 106. At this time, a control coefficient (parameter) for use to control the quantity of data of the variable-length compressed code generated in the encoding unit 103 is generated depending upon the degree of the data occupancy of a buffer memory 104 and the transmission rate of the transmission path 106 so as to be fed back to the encoding unit 103 via a filter 105. As a result compressed data representing an image can, in an averaged manner, be transmitted at a rate of the transmission path 106. Data received via the transmission path 106 is temporarily stored in a receiving buffer memory 107 so as to, together with the supplied control coefficient, be transmitted to a decoding unit 108. As a result, variable-length compressed encoded data is expanded and decoded before it is digital-to-analog converted in a D/A converter 109 so that an image is transmitted to a terminal 110.

A variety of systems for compressing a colour image to be performed in the encoding unit 103 shown in Fig. 7 have been disclosed. Among others a so-called Adaptive Discrete Cosine Transform (ADCT) system has been suggested as a preferable colour image encoding system.

Fig. 8 is a schematic structural view which illustrates an image encoding apparatus structured to act according to the above-described ADCT system. The above-described apparatus is arranged to receive an image represented by 8-bit data, that is, data converted into 256 gradations/colour by the A/D converter 102 shown in Fig. 7, the input image being composed of three or four colours, that is, RGB, YUV, YPbPr, L*a*b* or YMCK or the like. The input image is, by a DCT unit 201, immediately subjected to a two-dimensional discrete cosine transformation (hereinafter abbreviated by "DCT") in units of sub-blocks each of which is composed of 8 x 8 pixels. Then, the obtained conversion coefficients are linearly quantized in a linear quantizing unit 202. Each conversion coefficient has a different quantizing step size which is made to be a value obtained by, multiplying by K an element of an 8 x 8 quantization matrix the 8 x 8 quantization matrix being employed while taking into consideration for each conversion coefficient the difference of the visual sensitivity for sensing the quantization noise, where K is called a "control coefficient". The value of K is used to control the image quality and the quantity of compressed and generated data. Table 1 shows an example of a quantization matrix stored in a quantization matrix storage unit 203. That is, since the number of quantization steps is reduced when K is enlarged, the image quality deteriorates and the data quantity decreases.

| | | | | | | | |
|---|---|---|---|---|---|---|---|
| 16 | 11 | 10 | 16 | 24 | 40 | 51 | 61 |
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

After the quantization has been completed, a DC conversion component (hereinafter called a "DC component") is, in a one-dimensional prediction unit 204, subjected to a one-dimensional forecasting between adjacent sub-blocks. As a result, the forecasted error is Huffman-encoded in a Huffman encoding unit 205.

Then, the quantization output denoting the forecast error is divided into groups so that the identification number of a group which includes the forecasted error is Huffman-encoded before the value of the quantization output in the group is expressed by a fixed length code.

The AC conversion component (hereinafter called "AC component") is encoded using a zigzag scanning unit 206 in such a manner that the above-described quantization output is diagonally zigzag scanned in a direction from low spatial frequency to high spatial frequency as shown in Fig. 9.

That is, significant conversion coefficients, i.e. coefficients of non-zero value, are identified by an identification number according to horizonal and vertical spatial frequency. Also, the number of insignificant conversion coefficients, i.e. coefficients of zero value, scanned between each respective significant conversion coefficient and the next following scanned significant conversion coefficient is extracted. Each respective identification number and the corresponding extracted number of insignificant coefficients are paired and are Huffman encoded by the Huffman encoding unit 207.

The respective values of the quantization output, ie the significant conversion coefficients, are each expressed by a fixed length code.

Since the number of significant conversion coefficients is dependent on spatial frequency distribution, and will thus vary from one image frame to the next, the length of code generated for each image frame also will vary. It is thus difficult to match the capacity of the buffer memory 107, shown in Fig.7, to the amount of encoded data generated. If the capacity is too small, overflow will occur and the reproduced image will be degraded. If a large size memory is chosen to avoid such overflow, then there are penalties in extra hardware size and cost.

The above problem of avoiding overflow has been addressed by Mukana et al., IEEE Transactions on Communications, Vol. Com -32, No. 3 March 1984, pages 280-287. The apparatus described therein is of the type defined in the preamble of claim 1 appended. In the case of transmitting or recording still image data, if the quantization is not controlled adaptively it is neither possible to predict the time required for transmission nor possible to predict the storage capacity required for recording.

A variety of code length control technologies have been disclosed in European Patent Application EP-A-0447247 published 18 September 1991, and European Patent Application EP-A-0469835, European Patent Application EP-A-0469852, both published 5 February 1992.

EP-A-0 469 835 discloses iteratively controlling the quantization characteristic to keep the amount of code below a desired value. Moreover, plural encoders are arranged in parallel, using respectively different encoding control parameters. The output from the encoder whose amount of code is an optimum approximation of the desired amount is selected.

The present invention, as defined in the appended claims, is intended as a solution to the problems discussed above.

In the accompanying drawings

Fig. 1 is a structure block diagram which illustrates a first embodiment of the present invention;
Fig. 2 illustrates an image to be transmitted in a structure according to the first embodiment of the present invention;
Fig. 3 illustrates a calculating method according to the first embodiment of the present invention;
Fig. 4 is a structure view which illustrates a second embodiment of the present invention;
Fig. 5 illustrates a calculating method according to the second embodiment of the present invention;
Fig. 6 illustrates a calculation flow according to the second embodiment of the present invention;
Fig. 7 is a structural block diagram according to a conventional example;
Fig. 8 illustrates an ordinary variable-length encoding system;
Fig. 9, in detail, illustrates the ordinary variable-length encoding system;
Fig. 10 illustrates a relationship between control coefficients and information quantities, according to a third embodiment of the invention;
Fig. 11 illustrates another relationship between control coefficients and information quantities, according to the third embodiment;
Fig. 12 illustrates a further-detailed calculating method according to a fourth embodiment of the present invention;
Fig. 13 illustrates a calculating flow according to the fourth embodiment of the present invention;
Fig. 14 illustrates a further-detailed calculating method according to a fifth embodiment of the present invention;
Fig. 15 illustrates a calculating flow according to the fifth embodiment of the present invention;
Fig. 16 is a block diagram which illustrates a sixth embodiment of the image encoding apparatus according to the present invention;
Fig. 17 is a block diagram which illustrates the schematic structure of a conventional encoding system which employs a DCT conversion;
Fig. 18 illustrates a quantization process shown in Fig. 17;
Fig. 19 illustrates a quantization process shown in Fig. 17;
Fig. 20 illustrates a sixth embodiment of the present invention;
Fig. 21 further illustrates the sixth embodiment of the present invention; and
Fig. 22 further illustrates the sixth embodiment shown in Fig. 16.

<u>First Embodiment</u>

A first embodiment of the present invention will be described now with reference to the drawings. Fig. 1 is a structural block diagram which illustrates an image processing apparatus according to the present invention. An image received from a video camera or a host computer or an image scanner or the like is A/D converted by an A/D converter 2 before it is variable-length encoded by an encoding unit (1) given reference numeral 3 by the above-described so-called ADCT system. At this time the control coefficient K has a constant value $Q_1$ for the current one frame of the image. As a result, the compressed information quantity $B_1$ is measured and the measured quantity $B_1$ is transmitted to a calculating unit 5.

Simultaneously, the image data is also variable-length encoded by an encoding unit (2) given reference numeral 4 by the so-called ADCT system. At this time control coefficient K has a different constant value $Q_2$, for the current one frame of the image. The resulting, compressed information quantity $B_2$ is measured and also transmitted to the calculating unit 5. Reference numeral 6 represents an image data delay unit for delaying the image, which has been A/D-converted, by about one image frame.

Reference numeral 7 represents an encoding unit (0) for compressing and encoding the delayed image data under control of an optimum control coefficient $K=Q_0$ which is calculated by a linear approximation from $Q_1$, $Q_2$, the measured amounts $B_1$ and $B_2$ in the calculating unit 5, and from the predetermined desired quantity value $B_0$ of compressed and encoded data which value is already stored in a memory such as a ROM, a RAM and the like so as to be transmitted to the calculating unit 5.

Reference numeral 9 represents a transmission path comprising a transmission medium such as ground waves or an optical space or the like exemplified by an optical fibre, a satellite or microwaves in the case of instantaneous transmission. In case of accumulated transmission, it is a storage medium such as a tape type medium exemplified by a digital VTR or a DAT or the like, a disc-like medium such as a floppy disk or an optical disk or the like or a solid medium such as a semiconductor memory.

The transmission rate is determined depending upon the quantity of information of the original image, the compression rate and a required transmission time such that it is varied from several tens of kbits/second to several tens of Mbits/second.

On the other hand, data received through the transmission path 9 is temporarily stored in a receiving buffer memory 10 so that compressed encoded data read from the receiving buffer memory 10 is extended and decoded in the decoding unit 11 with the optimum control coefficient $Q_0$ which has been received simultaneously with the above-described data item. Then, it is digital-to-analog converted a D/A converting unit so that an image is transmitted to a terminal 13.

Referring to Figs. 2 and 3, the present invention will now be described in detail. Fig. 2 illustrates an example of an image to be transmitted, one frame of the image being an A/D converted image composed of 1280 pixels, each of which is constituted by 8 bits, in the horizontal direction and 1088 pixels in the longitudinal direction. The data capacity of one image is made of 1,280 x 1,088 x 8 = 11,141,120 bits. If the image is transmitted as a moving image at a speed of 30 frames/second a high speed transmission path capable of realizing 11,141,120 x 30 = 334,233,600 bits/second must be used.

On the other hand, the transmission path is usually arranged to act at a predetermined transmission rate. Therefore, an information quantity which exceeds the predetermined transmission rate will cause a data overload to occur and thereby the transmission cannot be made. Assuming that a transmission path, the transmission rate of which is 36.0000 Mbits/second, is used and as well assuming that the redundancy degree for information such as a sink code, an ID code and a parity is 5%, the transmission rate at which image information can be transmitted is 34.2000 Mbits/second and thereby the compressed information quantity for one image (one frame) is 1.1400 Mbits/frame. Therefore, the image of frame must be compressed to a degree which is 10.23% or less. Furthermore, dummy data amounting to the residual quantity: 1,140,000 - (11,141,120 x 0.1023) = 263.424 bits/frame, that is, 263.424 x 30 = 7,902.72 bits/second must be inserted.

Assuming that the control coefficient is a certain value and thereby the compressed information quantity of a certain image is 10%, the capacity of image information is 334,233,600 x 0.1.= 33,423,360 bits/seconds and thereby dummy data of 34,200,000 - (334,233,600 x 0.1) = 776,640 bits/second must be inserted.

Assuming that the control coefficient has a certain value and thereby the compressed information quantity of a certain image is 11%, the capacity of image information is 334,233,600 x 0.11 = 36,765,696 bits/seconds, resulting in a negative amount of dummy data of 34,200,000 - (344,233,600 x 0.1)= -2,565,696 bits/second, which corresponds to exceeding the transmission rate of the transmission path, causing a data overload to occur.

Therefore, it is necessary to constitute a structure in such a manner that the target compression rate set to 10.23% and an optimum control coefficient $Q_0$ is given to the encoding unit (0) given reference numeral 7 shown in Fig. 1 in order to obtain an approximate value which does not exceed the target compression rate of 10.23%.

Fig. 3 illustrates a process of determining optimum control coefficient $Q_0$, wherein a case in which the information quantity is compressed and encoded to about 1/10 by the so-called ADCT system is illustrated.

The encoding system is arranged to be similar to that shown in Fig. 8 such that 8 horizontal pixels x 8 longitudinal pixels are collected into a DCT sub-block and the DCT conversion is performed in units of the DCT sub-blocks before the conversion coefficient is linearly quantized. Each conversion coefficient has a different quantizing step size which is made to be a value obtained by multiplying an 8 x 8 quantization matrix element shown in Table 1 by K, the 8 x 8 quantization matrix being employed while taking into consideration for each conversion coefficient the difference of the visual sensitivity for sensing the quantization noise. The value of K is used to control the image quality and the quantity of generated data so that the above-described desired compression ratio of about 1/10 is realized. After the quantization has been completed, a DC conversion component is, as a subtraction value from zero, subjected to a one-dimensional forecasting between adjacent sub-blocks. Then, the forecast error is Huffman-encoded. Then, the quantization output denoting the forecast error is divided into groups so that the identification number of a group which includes the forecasted error is Huffman-encoded before the value of the quantization output in the group is expressed by a fixed length code. An AC conversion component excluding the DC component is encoded in such a manner that the above-described quantization output is zigzag scanned from the low frequency component to the high frequency component. That is, the significant coefficients are classified into groups depending upon their values, and the identification number of the group and the number of the insignificant coefficients held between each significant coefficient and a following significant coefficient positioned in front of it in the direction of the scan, are paired with the significant coefficient and then Huffman encoded. At this time, two control coefficients $Q_1$ and $Q_2$ are selected and relationships $Q_1 < Q_0$ and $Q_0 < Q_2$ are established.

Fig. 3 illustrates the relationship between control coefficient K for an ordinary image frame and the compressed information quantity Y. The above-described relationship between Y and K is expressed by function g, that is, Y = g (K), where function g is considered such that it extremely approximates a log curve expressed by:

$$Y = g(K) = p \log K + q$$

(where p and q are constants) (1)

Then, encoding using control coefficient $Q_1$ is performed in the encoding unit (1) given reference numeral 3 shown in Fig. 1 so that compressed information quantity $B_1$ is obtained.

Furthermore, encoding using control coefficient $Q_2$ is performed in the encoding unit (2) given reference numeral 4 shown in Fig. 1 so that compressed information quantity $B_2$ is obtained.

In the calculating unit 5 shown in Fig. 1, a straight Y = aK + b (wherein a and b are constants) which connects two points ($Q_1$, $B_1$) and ($Q_2$, $B_2$) is calculated.

$$Y = \frac{B_1 - B_2}{Q_1 - Q_2} \cdot K + \frac{Q_2 \cdot B_1}{Q_2 - Q_1} - \frac{Q_1 \cdot B_2}{Q_2 - Q_1} \quad (2)$$

Transformation is performed so that the following equation is obtained:

$$K = \frac{(Q_2 - Q_1) \cdot Y - Q_2 \cdot B_1 + Q_1 \cdot B_2}{B_2 - B_1} \quad (3)$$

Then, by setting $B_0$ shown in Fig. 3 to the compressed information quantity corresponding to the desired compression ratio (10.23%), the optimum control coefficient $Q_0$ can be obtained by substituting $B_0$ into Y in Equation (2).

$$Q_0 = \frac{(Q_2 - Q_1)\, B_0 - Q_2 \cdot B_1 + Q_1 \cdot B_2}{B_2 - B_1} \quad (4)$$

Actually, since the compressed information quantity generated with optimum control coefficient $K = Q_0$ has a value given by Y = g (K), the actual quantity is $B_0'$. Since equation (1) is a downward-convex log curve, the straight line, which connects two points on the downward-convex curve, necessarily is positioned on or above this curve as shown in Fig. 3. This means that: $B_0 > B_0'$ so that the desired compression ratio is not exceeded in any case. Therefore, data overload is avoided.

$Q_1$, $Q_2$ and $B_0$ of Equation (4) are known constant values. Therefore it is necessary to be capable of obtaining $B_1$ and $B_2$ by a trial of encoding. Therefore, the encoding units (1) and (2) respectively given reference numerals 3 and 4 shown in Fig. 1 are only required to generate the compressed information quantities.

Although the calculating unit 5 shown in Fig. 1 calculates the above-described Equation (4), the calculation may be performed by using a CPU or a look-up table which uses a ROM or a RAM or the like.

Although the above-described embodiment is arranged in such a manner that the relationship between the control coefficients and the compressed information quantities are expressed by a log curve, the actual relationship is sometimes different from this such that it can sometimes be approximated by a quadratic curve or a cubic curve depending upon the way of the quantization and the type of encoding employed in the encoding unit. However, any of the cases are commonly characterized in that each curve is a downward-convex curve (the tangent is always present below the curve). Therefore, the above-described method of determining the control coefficient can be effectively employed because of the above-described characteristics.

Second Embodiment

Fig. 4 is a structural block diagram which illustrates a second embodiment of the image encoding apparatus according to the present invention. An image received through a terminal 20 is A/D converted by an A/D converter 21 before it is variable-length encoded by an encoding unit (1) given reference numeral 22 by the above-described so-called ADCT system. At this time, control coefficient K is, as $Q_1$ which is a constant value, used to compress one frame of the image. As a result, a compressed information quantity $B_1$ is obtained so as to be transmitted to a comparison and calculating unit 26. Simultaneously, the image is also variable-length encoded by an encoding unit (2) given reference numeral 23 by the so-called ADCT system. At this time, control coefficient K is, as $Q_2$, which is a constant value, used to compress the one frame of the image. As a result, a compressed information quantity $B_2$ is obtained so as to be transmitted to the comparison and calculating unit 26. The same image is similarly variable-length encoded by an encoding unit (3) given reference numeral 24 by the so-called ADCT system. At this time, control coefficient K is, as $Q_3$, which is a constant value, used to compress the one frame of the image. As a result, a compressed information quantity $B_3$ is obtained so as to be transmitted to the comparison and calculating unit 26. Furthermore, the same image is similarly variable-length encoded by an encoding unit (4) given reference numeral 25 by the so-called ADCT system. At this time, control coefficient K is, as $Q_4$, which is a constant value, used to compress the one frame of the image. As a result, a compressed information quantity $B_4$ is obtained so as to be transmitted to the comparison and calculating unit 26.

Reference numeral 27 represents an image data delay unit for delaying the image, which has been A/D-converted, by about one image frame. Reference numeral 28 represents an encoding unit (0) for compressing and encoding the image data in dependance upon the optimum control coefficient $K = Q_0$ calculated by the comparison and calculating unit 26 so as to cause compressed and encoded data to be stored in a transmission buffer memory 29.

Reference numeral 30 represents a transmission path. Data received through the transmission path 30 is temporarily stored in a receiving buffer memory 31. Compressed and encoded data read from the receiving buffer memory 31 is, in the encoding and decoding unit 32, extended and decoded with optimum control coefficient $Q_0$ which has been received simultaneously. Then, it is digital-to-analog converted in the D/A converter 33 so that an image is transmitted from a terminal 34.

Then, the second embodiment of the present invention will now be described with reference to Figs. 5 and 6.

Then, a description will made with reference to a case in which an image to be transmitted is, as shown in Fig. 2, similar to that according to the above-described first embodiment and one image frame is compressed to 10.23% or less, respectively.

That is, it is necessary to constitute a structure in such a manner that the target compression rate is set to 10.23% and an optimum control coefficient $Q_0$ is given to the encoding unit (0) given reference numeral 28 shown in Fig. 4 in order to obtain an approximate value which does not exceed the target compression rate 10.23%.

Fig. 5 illustrates a process of determining the optimum control coefficient $Q_0$.

The encoding system is arranged to employ the so-called ADCT system shown in Fig. 8 similarly to the first embodiment.

Then, an assumption is made that four control coefficients $Q_1$, $Q_2$, $Q_3$ , and $Q_4$ are selected which hold relationships $Q_1 < Q_0$ and $Q_0 < Q_4$.

Fig. 5 illustrates the relationship between control coefficient K for an ordinary one image frame and the compressed information quantity Y thereof. The above-described relationship between Y and K is expressed by function g, that is, $Y = g(K)$.

In this state, $Y = g(K)$ closely approximates a log curve.

Then, encoding using control coefficient $Q_1$ is performed in the encoding unit (1) given reference numeral 22 shown in Fig. 4 so that compressed information quantity $B_1$ is obtained. Encoding using control coefficient $Q_2$ is performed in the encoding unit (2) given reference numeral 23 shown in Fig. 4 so that compressed information quantity $B_2$ is obtained. Encoding using control coefficient $Q_3$ is performed in the encoding unit (3) given reference numeral 24 shown in Fig. 4 so that compressed information quantity $B_3$ is obtained. Encoding using control coefficient $Q_4$ is performed in the encoding unit (4) given reference numeral 25 shown in Fig. 4 so that compressed information quantity $B_4$ is obtained. Then, the flow of the comparison and calculating unit 26 shown in Fig. 4 will now be described with reference to Fig. 6.

In the comparison and calculating unit 26 shown in Fig. 4, target compression information quantity $B_0$ is subjected to comparisons with $B_1$, $B_2$, $B_3$ and $B_4$ obtained by the above-described compressing and encoding trial such that $B_0 \leqq B_1$, $B_0 \leqq B_2$, $B_0 \leqq B_3$ and $B_0 \leqq B_4$, respectively (steps S1 to S4) so as to obtain N with which $B_0$ holds a relationship $B_N \leqq B_0 \leqq B_{N+1}$ (wherein N is a positive integer) (steps S5 to S7). If N is not obtained, an error is recognized (step S9).

At the time at which N is detected, straight line $Y = aK + b$ (where a and b are constants) which connects $(Q_N, B_N)$

and ($Q_{N+1}$, $B_{N+1}$) to each other is calculated in the comparison and calculating unit 26 shown in Fig. 4. As a result, control coefficient K is obtained from Equation (5):

$$K = \frac{(Q_{N+1} - Q_N)\cdot Y - Q_{N+1}\cdot B_N + Q_N\cdot B_{N+1}}{B_{N+1} - B_N} \quad (5)$$

Then, by making $B_0$ shown in Fig. 5 to correspond to the desired compression ratio (10.23%) so that optimum control coefficient $Q_0$ can be obtained by substituting $B_0$ into Y in Equation (5).

$$Q_0 = \frac{(Q_{N+1} - Q_N)\cdot B_0 - Q_{N+1}\cdot B_N + Q_N\cdot B_{N+1}}{B_{N+1} - B_N} \quad (6)$$

Actually, since the compressed information quantity generated with optimum control coefficient $K = Q_0$ has a value given by Y = g (K), the actual quantity is $B_0'$. This means

that: $B_0 > B_0$/so that the desired compression ratio is not exceeded in any case. Therefore, a data overload of the transmission path is avoided.

Among the above-described values, $Q_1$, $Q_2$, $Q_3$, $Q_4$ and $B_0$ are known constant values in the apparatus, therefore it it is necessary to be capable of obtaining only $B_1$, $B_2$, $B_3$ and $B_4$ by trial encoding. Therefore, the encoding units (1), (2), (3) and (4) given reference numerals 22, 23, 24 and 25 shown in Fig. 4 are only required to generate the compressed information quantities.

Although the above-described Equation (6) is calculated in the above-described comparison and calculating unit 26 shown in Fig. 4, the calculation may be performed by using a CPU or the like or a look-up table which uses a ROM or a RAM or the like. Although the above-described second embodiment is arranged in such a manner that the number of the encoding units for generating only the encoded information quantity is made to be four, the above-described number can be increased, resulting an effect to be obtained in that the optimum control coefficient infinitely approximates the desired compressed information quantity while being limited to be smaller than the same. As a result, encoding can efficiently be performed. Therefore, the present invention is not limited to the above-described number of the encoding units. Furthermore, although the above-described ordinary encoding system as shown in Fig. 8 is employed in the encoding unit for the purpose of easily making the description, another encoding system may be employed. In addition, in the above-described case, the DCT unit shown in Fig. 8 is commonly employed in the encoding units. Therefore, due to the necessity of providing a plurality thereof they can be unified into one unit.

The frequency conversion is not limited to DCT since other types of orthogonal conversion may be employed.

In addition, the present invention is not limited to the block size arranged to be 8 x 8 pixels.

Furthermore, the encoding method applied after the quantization has been completed is not limited to the Huffman encoding method. For example, an arithmetical encoding method or a run-length encoding method may be employed.

As described above, the quantity of compressed data can be satisfactorily controlled.

## Third Embodiment

The structure of the third embodiment is characterized by a means for adjusting the first-order term, or the zero order term, or both the zero and first order terms of the applied linear approximation.

The basic block structure according to this embodiment is arranged to be similar to that shown in Fig. 1.

Fig. 10 illustrates a case in which control coefficient K and information quantity Y hold a special relationship.

In a case where the information quantities obtained by quantization using control coefficients $Q_1$ and $Q_2$ are $B_1$ and $B_2$, respectively, and where the original information quantity is $B_0$, the control coefficient which is obtained by linear approximation Y = aK + b as shown in Fig. 10 becomes $Q_0$. Furthermore, if the actual information quantity $B_0$, obtained through the quantization is performed using control coefficient $Q_0$, holds a relationship $B_0' > B_0$, data overload occurs.

Therefore, by adding a predetermined information quantity β (a constant) to approximation curve Y = aK + b obtained with information quantities $B_l$ and $B_2$, approximation Y' = aK + b + β can be obtained. Then, quantization with control coefficient $Q_{0\beta}$ obtained with desired information quantity $B_0$ is performed so that the actual information quantity becomes $B_0''$. As a result, a relationship $B_0'' < B_0$ and thereby the quantity becomes the desired information quantity $B_0$ or less. Therefore, information can be quantized and compressed so as to be transmitted while preventing data overload.

Since Y = g (K) is, in Fig. 10, ordinarily a downward convex curve, it is preferable that the above-described constant β holds a relationship β > 0. By adding β thus-determined, the possibility of occurrence of a data overload can be decreased. The structure may be arranged in such a manner that β is set manually to the calculating unit 5 in accordance with the supplied image or the same is automatically set in accordance with the characteristics of the image.

Fig. 11 illustrates control coefficient K and information quantity Y in a case where approximation Y = aK + b shown in Fig. 10 is transformed (amended) into $Y' = (a + \alpha) K + b + \beta$. As described with reference to Fig. 3, by performing quantization with desired information quantity $B_0$ and control coefficient $Q_{0\alpha\beta}$ obtained by approximation Y = (a + a) K + b + β, the actual information quantity becomes $B_0''$ which holds a relationship $B_0'' < B_0$. Since the information quantity does not exceed the desired information quantity $B_0$, quantization and compression can be performed so as to transmit information.

Furthermore, it is preferable that α holds a relationship $\alpha > 0$, similarly to β.

According to the above-described embodiment of the present invention, the above-described adapted linear approximation is applied. As a result, quantization compression can be performed while preventing a data overload even if the image is an image of a type in which the quantization control coefficient and the information quantity holds a special relationship.

## Fourth Embodiment

The fourth embodiment is characterized in that, in a case where the desired information quantity is larger than the information quantity generated by the trial made with the first control coefficient as a result of the trial of a plurality of variable-length compressing and encoding with M-types of control coefficients, or in a case where the information quantity is smaller than the information quantity generated by the trial made with the M-th control coefficient, variable-length encoding is performed using a predetermined constant value as the control coefficient.

Since the basic block structure according to this embodiment is the same as that shown in Fig. 1, its description is omitted here.

Fig. 13 is a flow chart for the calculation to be performed in the structure according to this embodiment.

In a case where the image is very simple such as a colour bar and the original information quantity is small as designated by curve (B) shown in Fig. 12 as a result of a trial performed by using two control coefficients $Q_1$ and $Q_2$ shown in Fig. 1, a relationship $B_0 > B_{1B}$ is held (S101) and the calculating unit 5 shown in Fig. 1 transmits $Q_1$ to the encoding unit 7 while making $Q_0 = Q_1$.

In a case where the image is, as designated by curve (A) shown in Fig. 12, very complicated such as a zone plate and the original information quantity is very large as a result of the trial performed by using two control coefficients $Q_1$ and $Q_2$, a relationship $B_0 < B_{2A}$ is held (S102) and the calculating unit 5 shown in Fig. 1 transmits $Q_{MAX}$ to the encoding unit 7 while making $Q_0 = Q_{MAX}$ (S104). In a case where $B_{2A} < B_0 \leqq B_{1B}$, $Q_0$ is calculated similarly to the first embodiment (S105).

As a result, the desired compression ratio is not exceeded in any case and a data overload will not take place on the transmission path.

## Fifth Embodiment

A fifth embodiment of the present invention is a modification to the second embodiment. Since the basic structure is the same as that shown in Fig. 4, its description is omitted here.

Fig. 15 is a flow chart for the calculation to be performed in the structure according to this embodiment, the flow chart being basically arranged to be the same as that shown in Fig. 6.

In a case where the image is very simple such as a colour bar and the original information quantity is small as designated by curve (B) shown in Fig. 14 as a result of a trial performed by using four control coefficients $Q_1$, $Q_2$, $Q_3$ and $Q_4$ shown in Fig. 14, a relationship $B_0 > B_{1B}$ is held and the calculating unit 26 shown in Fig. 4 performs a transmission to the encoding unit (0) while making $Q_0 = Q_1$ (S9).

In a case where the image is, as designated by curve (A) shown in Fig. 14, very complicated such as a zone plate and the original information quantity is very large as a result of the trial performed by using four control coefficients $Q_1$, $Q_2$, $Q_3$ and $Q_4$, a relationship $B_0 < B_{4A}$ is held and the calculating unit 26 shown in Fig. 4 performs a transmission to the encoding unit 0 while making $Q_0 = Q_{MAX}$ (S10).

Although the above-described embodiment is arranged in such a manner that the relationship between the control coefficients and the compressed information quantities are expressed by a log curve, the actual relationship is sometimes different from this such that it can sometimes be approximated by a quadratic curve or a cubic curve depending upon the way of the quantization and the type of encoding employed in the encoding unit. However, any of the cases are commonly characterized in that each curve is a downward-convex curve (the tangent is always present below the curve). Therefore, the above-described method of determining the control coefficient can be effectively employed because of the above-described characteristics.

Sixth Embodiment

In general, in a case where an image signal is transmitted, the transmission path possesses a transmission capacity per unit time. Therefore, it is preferable that, in a case where one frame must be transmitted at a predetermined moment as in case of a moving image, the quantity of the code to be transmitted be a quantity fixed in units of frames or image blocks. Although the overall quantity of the code can be adjusted by changing the quantization step coefficient in the quantization process, the quantization step coefficient must be forecast in order to cause the overall quantity of encoded data to be included in the set code quantity because the quantity of encoded data is different depending upon the image. The relationship between the above-described quantization step coefficient and the overall quantity of the encoded data establish a monotone decreasing function. Furthermore, an average image is expressed by a logarithmic curve as shown in Fig. 18.

As a method of estimating the quantization step size by utilizing the above-described characteristics, there has, according to the above-described embodiments, been described a method in which different trial quantization step coefficients are applied and the quantity of code obtained for each trial coefficient is measured and a linear interpolation is then performed to determine the approximate value of the optimum quantization step coefficient.

Fig. 19 illustrates the above-described method of estimating the quantization step size.

However, the above-described method encounters a problem in that many trials must be provided in order to reduce the error from the set quantity of the code, a plurality of trials must be performed in parallel in order to shorten the time required for estimation and the size of hardware of the apparatus cannot be reduced if the number of the measuring points is increased in order to improve the accuracy of the measured results.

According to the sixth embodiment to be described below, there is provided an encoding apparatus for quantizing converted data obtained by converting image information into the spatial frequency domain in units of blocks composed of a plurality of pixels, and for variable-length encoding the quantized converted data, the encoding apparatus comprising means for measuring the quantity of code by, in parallel, performing quantization to variable-length encoding (VLC) with predetermined plural quantization step coefficients, and a calculating means for estimating a quantization step coefficient for a desired quantity of the code by a linear approximation, from the measured quantity of the code, wherein the intervals between the trial quantization step coefficients, for each of which the quantity of the code is measured, are widened in proportion to the value of the quantization step coefficient.

Accordingly, the approximation error of the estimated quantization quantity can be approximated to a substantially constant value in comparison to a case in which the trial coefficients are equispaced. In particular, in a case where the quantity of the quantized code is large, the intervals between the trial coefficients can be narrowed. Therefore, an effect can be obtained in that the approximation error of the above-described estimated quantization quantity can be reduced. As a result, the estimation accuracy of the quantity of the quantized code can be improved while necessitating a small number of trials coefficients.

Fig. 16 is a block diagram which illustrates the sixth embodiment of an encoding apparatus according to the present invention and structure in such a manner that the present invention is applied to a transmission apparatus for transmitting an image signal.

Referring to Fig. 16, reference numeral 322 represents an input terminal for receiving a digital image signal. The image signal supplied for each line is, in a block forming circuit 324, divided into blocks each of which is composed of, for example, 8 longitudinal pixels and 8 horizontal pixels.

Pixel data in each block is converted into spatial frequency data by a DCT conversion circuit 326. The above-described conversion data is temporarily stored in a memory 328 and as well as the same is linearly quantized in quantizing circuits 338a to 338n with different quantization step coefficients $k_1$ to $k_n$ received from generating circuits 334a to 334n for generating the predetermined quantization step coefficients $k_1$ to $k_n$. According to this embodiment, quantization step coefficients $k_1$ to $k_n$ generated in the generating circuits 334a to 334n are not made in such a manner that the step interval is equalized as shown in Fig. 19 but the same is widened in inverse proportion to the quantity of the quantized code as shown in Fig. 22.

Data quantized by the quantizing circuits 338a to 338n is variable-length encoded by VLCs 340a to 340n so that code quantities $nb_1$ to $nb_n$ for each data are obtained. However, the actual encoded data is not transmitted here but only the quantity of the code is measured before it is transmitted to a calculating circuit 342.

In the calculating circuit 342, code quantities $nb_1$ to $nb_n$ at each measuring point and set code quantity $nb_0$ determined from the transmission rate are subjected to a comparison so as to identify a measuring point which is larger than $nb_0$ and nearest $nb_0$ and a measuring point which is smaller than $nb_0$ and nearest $nb_0$ are approximated by a straight line. As a result, quantization step coefficient $k_0$ with respect to set code quantity $nb_0$ is estimated before it is transmitted to the quantizing circuit 330. The quantizing circuit 330 receives conversion encoding data transmitted after it has been delayed by a predetermined period by the memory 328 so as to perform the linear quantization with estimated quantizing step coefficient $k_0$ before its result is supplied to a VLC 332.

In the VLC 332, the variable-length encoding operation is performed so that its result is transmitted to the transmission path through a terminal 336 while extremely reducing the error with respect to a predetermined transmission rate.

According to the above-described structure, the relationship between the total code quantity nb and quantization step coefficient k closely approximates a log curve. Therefore, the quantization step coefficient is selected in such a manner that the measuring points are set in an exponential function manner as shown in Fig. 20 so that, for example, the interval between the measured results of the code quantities is made to be equalized and the quantization error is made to be constant.

Furthermore, an image of a type which encounters a quantization error because of its large code quantity can be processed to improve it in such a manner that the measuring points are, as shown in Fig. 21, set adjacent to the points as each of which the quantization step coefficient is small.

Then, this embodiment will now be described in detail with reference to Figs. 16 and 22.

First, two quantization step coefficients $k_3$ and $k_4$ are selected, $k_3$ and $k_4$ being arranged to hold the following relationships with optimum quantization step coefficient $k_0$:

$$k_3 < k_4,\ k_0 < k_4$$

Referring to Fig. 16, the liner quantization and the VLC are performed with the quantization step coefficients $k_3$ and $k_4$ so that compressed code quantities $nb_3$ and $nb_4$ are obtained. Referring to Fig. 22, point ($k_3$, $nb_3$) and point ($k_4$, $nb_4$) are connected to each other by a straight line so that estimated value $k_0'$ of the quantization step coefficient is obtained from code quantity $nb_0$ set for each predetermined period.

Actually, since optimum quantization step coefficient $k_0$ with respect to $nb_0$ is on a curve shown in Fig. 22, compressed code quantity $nb_0'$ with respect to $k_0'$ and $nb_0$ always hold the following relationship:

$$nb_0' < nb_0$$

As a result, the desired code quantity cannot be exceeded in any case so that it can be quantized.

As a result of the above-described structure, in a case where the code quantity is small and thereby the estimated error of the quantization step coefficient becomes small, the measuring points is decreased. In a case where the code quantity is large and thereby the error becomes large, the measuring points are increased. Therefore, the estimation accuracy of the quantization step coefficient can be improved.

Although the above-described embodiments are arranged in such a manner that the size of the formed block is made to be 8 x 8, the size may be varied.

Furthermore, an orthogonal conversion (spatial frequency conversion) other than DCT may be employed.

As described above, according to the image processing apparatus according to the present invention, the data quantity for a predetermined region can be set to a desired data quantity while reducing the quantity of hardware and exhibiting satisfactory high accuracy.

The above-described embodiments are not limited to a moving image but the same can be applied to a still image.

The above described invention finds application not only in the processing of images to be displayed by a monitor, but also in image reproduction by printing such as by laser beam or ink jet.

**Claims**

**1.** An image processing apparatus comprising:

first encoding means (7;28;330;332) arranged to receive data representing an image, to produce a first amount ($B_o'$) of encoded image data in response to a first control parameter ($Q_o$); and control means (3 to 5) to adapt said first control parameter ($Q_o$) so that said first amount ($B_o'$) of encoded image data shall not exceed a predetermined amount ($B_o$); which apparatus is characterised in that:-

said control means (3 to 5) comprises:

second and third encoding means (3,4;22,23;338a and 340a,338b and 340b), arranged to receive data identical to that received by said first encoding means (7;28;330;332) to produce, in parallel, respective second and third different amounts ($B_1$, $B_2$; $nb_1$, $nb_2$) of encoded image data in response to respective second and third control parameters ($Q_1$, $Q_2$; $k_1$, $k_2$) different from each other; and determining means (5;26;342) responsive to said second and third control parameters ($Q_1$, $Q_2$; $k_1$; $k_2$), said measured second and third amounts

($B_1$, $B_2$; $nb_1$, $nb_2$) and said predetermined amount to determine said first control parameter ($Q_o$) so that said first amount ($B_o$') shall approximate but not exceed said predetermined amount ($B_o$).

2. An apparatus according to claim 1, wherein said determining means (5;26) is operable to determine said first control parameter by using a linear approximation.

3. An apparatus according to claim 1 or 2, wherein said first encoding means (7;28;330;332) includes quantizing means and the first control parameter ($Q_o$) is a quantizing step.

4. An apparatus according to any of claims 1 to 3, wherein the value of the second control parameter ($Q_1$) is larger than that of said first control parameter ($Q_o$) and said first amount ($B_o$') is larger than said second amount ($B_1$).

5. An apparatus according to claims 1 to 4, wherein said first encoding means (7;28;330;332) is adapted to perform encoding by employing an orthogonal transformation.

6. An apparatus according to any of claims 1 to 5, including input means to input data representing a sequence of pictures.

7. An apparatus according to any of claims 1 to 6, further comprising a buffer memory (8) for storing the image data encoded by said first encoding means (7).

8. An apparatus according to any of claims 1 to 7, further comprising transmitting means (9) for transmitting the image data encoded by said first encoding means (7) via a transmission path.

9. An apparatus according to any of claims 1 to 8, further comprising decoding means (11) for decoding the image data encoded by said first encoding means (7).

10. The apparatus as claimed in claim 2, wherein said linear approximation is based on use of the following formula:

$$y = a\,k + b\ ;\ a = (B_1 - B_2)/(Q_1 - Q_2);\ b = (Q_2 B_1 - Q_1 B_2)/(Q_2 - Q_1)$$

where y and k represent said predetermined data amount ($B_o$) and said first control parameter ($Q_o$), $B_1$, $B_2$ represent said second and third data amounts corresponding to said second and third control parameters $Q_1$, $Q_2$.

11. An apparatus as claimed in claim 2, wherein said linear approximation is based on use of the following formula:

$$y = a\,k + b + \beta$$

where y, a, k and b are as defined in claim 10 and $\beta$ is a constant selected manually, or automatically in accordance with the characteristics of the image.

12. An apparatus as claimed in claim 2, wherein said linear approximation is based on the following formula:

$$y = (a + \alpha)\,k + b + \beta$$

y, a, k, b and $\beta$ being as defined in claim 11 and $\alpha$ being a constant.

13. An apparatus as claimed in claim 1 including additional encoding means responsive to at least one additional control parameter ($Q_3$, $Q_4$) in addition to said first, second and third encoding means; and comparison and selection means to compare the data amounts encoded by said first, second and additional encoding means and to select therefrom two data amounts nearest above and below said predetermined amount, and to select the corresponding control parameters for input to said determining means, as said second and third data amounts and as said second and third control parameters, respectively.

14. An apparatus as claimed in claim 13, including store means holding equispaced parameter values for use as said control parameters of said second, third, and additional encoding means.

**15.** An apparatus as claimed in claim 13 including store means holding proportionate interval parameter values for use as said control parameters of said second, third and additional encoding means, the intervals between said parameter values increasing in proportion to the parameter value.

**16.** An apparatus as claimed in claim 1, including store means holding parameters for use as said second and third control parameters.

**17.** An apparatus as claimed in combined claims 4 and 16, wherein said store means also holds default maximum and minimum parameters ($Q_{max}$, $Q_n$) for use as said first control parameter; comparison means for comparing said second and third data amounts with said predetermined amount; and selection means for selecting said default maximum or minimum parameter as said first control parameter when said second data amount exceeds said predetermined amount or said predetermined amount exceeds said first data amount, respectively.

**18.** An apparatus according to claim 1, wherein said second and third encoding means perform full encoding operations to produce said second and third amounts of encoded image data.

**19.** A method of encoding received data representing an image wherein a first amount ($B_o$') of encoded image data is produced by a first encoding means (7) in response to a first control parameter ($Q_o$) and the first control parameter is adapted so that said first amount ($B_o$') shall not exceed a predetermined amount ($B_o$), which method is characterised by:

producing a second amount ($B_1$) of encoded image data from the received data by controlling a second encoding means (3) using a second control parameter ($Q_1$);
producing a third amount ($B_2$) of encoded image data from the received data by controlling a third encoding means (4), in parallel with said second encoding means (3), using a third control parameter ($Q_2$) different from said second control parameter; and
determining said first control parameter ($Q_o$) from said second and third data amounts ($B_1$, $B_2$), said second and third control parameters ($Q_1$, $Q_2$), and said predetermined data amount ($B_o$) as basis for approximation.

**Patentansprüche**

**1.** Bildverarbeitungsgerät mit
einer ersten Kodiereinrichtung (7; 28; 330; 332) zum Empfang von ein Bild darstellenden Daten, damit eine erste Menge ($B_o$') von kodierten Bilddaten im Ansprechen auf einen ersten Steuerparameter ($Q_0$) erzeugt wird, und einer Steuereinrichtung (3 bis 5) zur Anpassung des ersten Steuerparameters ($Q_0$), so daß die erste Menge ($B_0$') von kodierten Bilddaten eine vorbestimmte Menge ($B_0$) nicht überschreitet,
**dadurch gekennzeichnet, daß**

die Steuereinrichtung (3 bis 5)
zweite und dritte Kodiereinrichtungen (3; 4; 22; 23; 338a und 340a, 338b und 340b) zum Empfang von Daten aufweist, die identisch zu denen von der ersten Kodiereinrichtung (7; 28; 330; 332) empfangenen sind, damit jeweilige zweite und dritte unterschiedliche Mengen ($B_1$, $B_2$; $nb_1$, $nb_2$) von kodierten Bilddaten im Ansprechen auf jeweilige zweite und dritte voneinander verschiedene Steuerparameter ($Q_1$, $Q_2$; $k_1$, $k_2$) parallel erzeugt werden, und eine auf die zweiten und dritten Steuerparameter ($Q_1$, $Q_2$; $k_1$, $k_2$) ansprechende Bestimmungseinrichtung (5; 26; 342) aufweist, wobei die gemessenen zweiten und dritten Mengen ($B_1$, $B_2$; $nb_1$, $nb_2$) und die vorbestimmte Menge den ersten Steuerparameter ($Q_0$) derart bestimmen, daß die erste Menge ($B_0$') sich der vorbestimmten Menge ($B_0$) annähert, diese aber nicht überschreitet.

**2.** Gerät nach Anspruch 1,
**dadurch gekennzeichnet, daß**
die Bestimmungseinrichtung (5; 26) der erste Steuerparameter unter Verwendung einer linearen Annäherung bestimmt ist.

**3.** Gerät nach einem der Ansprüche 1 oder 2,
**dadurch gekennzeichnet, daß**

die erste Kodiereinrichtung (7; 28; 330; 332) eine Quantisierungseinrichtung enthält und der erste Steuerparameter ($Q_0$) ein Quantisierungsschritt ist.

**4.** Gerät nach einem der Ansprüche 1 bis 3,
**dadurch gekennzeichnet, daß**
der Wert des zweiten Steuerparameters ($Q_1$) größer als der des ersten Steuerparameters ($Q_0$) und die erste Menge ($B_n$') größer als die zweite Menge ($B_1$) ist.

**5.** Gerät nach einem der Ansprüche 1 bis 4,
**dadurch gekennzeichnet, daß**
die erste Kodiereinrichtung (7; 28; 330; 332) die Kodierung unter Einsatz einer Orthogonaltransformation durchführt.

**6.** Gerät nach einem der Ansprüche 1 bis 5,
**gekennzeichnet durch**
eine Eingabeeinrichtung zur Eingabe von eine Bildsequenz darstellenden Daten.

**7.** Gerät nach einem der Ansprüche 1 bis 6,
**gekennzeichnet durch**
einen Pufferspeicher (8) zur Speicherung der von der ersten Kodiereinrichtung (7) kodierten Bilddaten.

**8.** Gerät nach einem der Ansprüche 1 bis 7,
**gekennzeichnet durch**
eine Übertragungseinrichtung (9) zur Übertragung der von der ersten Kodiereinrichtung (7) kodierten Bilddaten über einen Übertragungsweg.

**9.** Gerät nach einem der Ansprüche 1 bis 8,
**gekennzeichnet durch**
eine Dekodiereinrichtung (11) zur Dekodierung der von der ersten Kodiereinrichtung (7) kodierten Bilddaten.

**10.** Gerät nach Anspruch 2,
**dadurch gekennzeichnet, daß**

die lineare Annäherung auf der Verwendung der folgenden Formel beruht:

$$y = ak + b;\ a = (B_1\text{-}B_2)/(Q_1\text{-}Q_2);\ b = (Q_2B_1\text{-}Q_1B_2)/(Q_1\text{-}Q_2),$$

wobei y und k die vorbestimmte Datenmenge ($B_0$) und den ersten Steuerparameter ($Q_0$) darstellen und $B_1$, $B_2$ die den zweiten und dritten Steuerparametern $Q_1$, $Q_2$ entsprechenden zweiten und dritten Datenmengen darstellen.

**11.** Gerät nach Anspruch 2,
**dadurch gekennzeichnet, daß**

die lineare Annäherung auf der Verwendung der folgenden Formel beruht:

$$y = ak + b + \beta,$$

wobei y, a, k und b wie in Anspruch 10 angegeben definiert sind und β eine manuell oder automatisch entsprechend den Bildeigenschaften ausgewählte Konstante ist.

**12.** Gerät nach Anspruch 2,
**dadurch gekennzeichnet, daß**

die lineare Annäherung auf folgender Formel beruht:

$$y = (a + \alpha)k + b + \beta,$$

wobei y, a, k, b und $\beta$ wie in Anspruch 11 angegeben definiert sind und $\alpha$ eine Konstante ist.

**13.** Gerät nach Anspruch 1,
**gekennzeichnet durch**
eine zusätzliche, auf mindestens einen zusätzlichen Steuerparameter ($Q_3$, $Q_4$) ansprechende Kodiereinrichtung zusätzlich zur ersten, zweiten und dritten Kodiereinrichtung, und einer Vergleichs- und Auswahleinrichtung zum Vergleich der von der ersten, zweiten und zusätzlichen Kodiereinrichtung kodierten Datenmengen und zur Auswahl von zwei am nächsten oberhalb und unterhalb der vorbestimmten Menge liegenden Datenmengen daraus, sowie zur Auswahl der entsprechenden Steuerparameter zur Eingabe in die Bestimmungseinrichtung als die jeweiligen zweiten und dritten Datenmengen und die jeweiligen zweiten und dritten Steuerparameter.

**14.** Gerät nach Anspruch 13,
**gekennzeichnet durch**
eine Parameterwerte mit gleichem Abstand zur Verwendung als Steuerparameter der zweiten, dritten und zusätzlichen Kodiereinrichtungen speichernde Speichereinrichtung.

**15.** Gerät nach Anspruch 13,
**gekennzeichnet durch**
eine Parameterwerte mit einem proportionalen Intervall zur Verwendung als Steuerparameter der zweiten, dritten und zusätzlichen Kodiereinrichtungen speichernde Speichereinrichtung, wobei sich die Intervalle zwischen den Parameterwerten proportional zum Parameterwert vergrößern.

**16.** Gerät nach Anspruch 1,
**gekennzeichnet durch**
eine Parameterwerte zur Verwendung als zweite und dritte Steuerparameter enthaltende Speichereinrichtung.

**17.** Gerät nach den kombinierten Ansprüchen 4 und 16,
**dadurch gekennzeichnet, daß**
die Speichereinrichtung auch Standard-Maximal- und Minimalparameter ($Q_{max}$, $Q_n$) zur Verwendung als ersten Steuerparameter, eine Vergleichseinrichtung zum Vergleich der zweiten und dritten Datenmengen mit der vorbestimmten Menge und eine Auswahleinrichtung zur Auswahl des Standard-Maximal- oder Minimalparameters als ersten Steuerparameter enthält, wenn die zweite Datenmenge die jeweilige vorbestimmte Menge übersteigt oder die vorbestimmte Menge die erste Datenmenge übersteigt.

**18.** Gerät nach Anspruch 1,
**dadurch gekennzeichnet, daß**
die zweite und dritte Kodiereinrichtung vollständige Kodiervorgänge zur Erzeugung der zweiten und dritten Mengen von kodierten Bilddaten durchführen.

**19.** Verfahren zur Kodierung von ein Bild darstellenden empfangenen Daten, wobei eine erste Menge ($B_0'$) von kodierten Bilddaten im Ansprechen auf einen ersten Steuerparameter ($Q_0$) von einer ersten Kodiereinrichtung (7) erzeugt wird und der erste Steuerparameter derart angepaßt ist, daß die erste Menge ($B_0'$) eine vorbestimmte Menge ($B_0$) nicht überschreitet,
**gekennzeichnet durch** die Schritte

Erzeugen einer zweiten Menge ($B_1$) von kodierten Bilddaten aus den empfangenen Daten durch Steuerung einer zweiten Kodiereinrichtung (3) unter Verwendung eines zweiten Steuerparameters ($Q_1$),
Erzeugen einer dritten Menge ($B_2$) von kodierten Bilddaten aus den empfangenen Daten durch Steuerung einer zur zweiten Kodiereinrichtung (3) parallelen dritten Kodiereinrichtung (4) unter Verwendung eines vom zweiten Steuerparameter verschiedenen dritten Steuerparameters ($Q_2$) und
Bestimmen des ersten Steuerparameters ($Q_0$) aus den zweiten und dritten Datenmengen ($B_1$, $B_2$) mit den zweiten und dritten Steuerparametern ($Q_1$, $Q_2$) und der vorbestimmten Datenmenge ($B_0$) als Grundlage für eine Annäherung.

## Revendications

1. Appareil de traitement d'images comprenant :

des premiers moyens de codage (7;28;330;332) agencés de manière à recevoir des données représentant une image, pour produire une première quantité ($B_0$') de données d'images codées en réponse à un premier paramètre de commande ($Q_0$); et des moyens de commande (3 à 5) pour adapter ledit premier paramètre de commande ($Q_0$) de telle sorte que ladite première quantité ($B_0$') de données d'images codées ne dépasse pas une quantité prédéterminée ($B_0$); lequel appareil est caractérisé en ce que :
lesdits moyens de commande (3 à 5) comprennent :
des seconds et troisièmes moyens de codage (3,4;22,23;338a et 340a, 338b et 340b) agencés de manière à recevoir des données identiques à celles reçues par lesdits premiers moyens de codage (7;28;330;332) pour produire, parallèlement, des seconde et troisième quantités respectives différentes ($B_1$, $B_2$; $nb_1$, $nb_2$) de données d'images codées en réponse à des second et troisième paramètres respectifs de commande ($Q_1$,$Q_2$; $k_1$,$k_2$) différents l'un de l'autre; et des moyens de détermination (5;26;342) aptes à répondre auxdits second et troisième paramètres de commande ($Q_1$,$Q_2$,$k_1$;$k_2$), lesdites seconde et troisième quantités mesurées ($B_1$, $B_2$; $nb_1$, $nb_2$) et à ladite quantité prédéterminée, pour déterminer ledit premier paramètre de commande ($Q_0$) de telle sorte que ladite première quantité ($B_0$') doit approximer, mais ne pas dépasser ladite quantité prédéterminée ($B_0$).

2. Appareil selon la revendication 1, dans lequel lesdits moyens de détermination (5;26) peuvent fonctionner de manière à déterminer ledit premier paramètre de commande moyennant l'utilisation d'une approximation linéaire.

3. Appareil selon la revendication 1 ou 2, dans lequel lesdits premiers moyens de codage (7;28;330;332) incluent des moyens de quantification et le premier paramètre de commande ($Q_0$) est un échelon de quantification.

4. Appareil selon l'une quelconque des revendications 1 à 3, dans lequel la valeur du second paramètre de commande ($Q_1$) est supérieure à celle dudit premier paramètre de commande ($Q_0$) et ladite première quantité ($B_0$') est supérieure à ladite seconde quantité ($B_1$).

5. Appareil selon l'une des revendications 1 à 4, dans lequel lesdits premiers moyens de codage (7;28;330;332) sont adaptés pour l'exécution d'un codage en utilisant une transformation orthogonale.

6. Appareil selon l'une quelconque des revendications 1 à 5, comprenant des moyens d'entrée pour entrer des données représentant une séquence d'images.

7. Appareil selon l'une quelconque des revendications 1 à 6, comprenant en outre une mémoire tampon (8) pour mémoriser les données d'images codées par lesdits premiers moyens de codage (7).

8. Appareil selon l'une quelconque des revendications 1 à 7, comprenant en outre des moyens d'émission (9) pour émettre les données d'images codées par lesdits premiers moyens de codage (7), par l'intermédiaire d'une voie de transmission.

9. Appareil selon l'une quelconque des revendications 1 à 8, comprenant en outre des moyens de décodage (11) pour décoder les données d'images codées par lesdits premiers moyens de codage (7).

10. Appareil selon la revendication 2, dans lequel ladite approximation linéaire est basée sur l'utilisation de la formule suivante :
$y = a\,k + b$ ; $a = (B_1-b_2)/(Q_1-Q_2)$ ; $b = (Q_2B_1-Q_1B_2)/(Q_2-Q_1)$ y et k représentant ladite quantité de données prédéterminée ($B_0$) et ledit premier paramètre de commande ($Q_0$), $B_1$, $B_2$ représentant lesdites seconde et troisième quantités de données correspondant auxdits seconds et troisièmes paramètres de commande $Q_1$, $Q_2$.

11. Appareil selon la revendication 2, dans lequel ladite approximation linéaire est basée sur l'utilisation de la formule suivante :

$$y = a\,k + b + \beta$$

y, a, k et b étant tels que définis dans la revendication 10 et β étant une constante sélectionnée manuellement ou automatiquement en fonction des caractéristiques de l'image.

**12.** Appareil selon la revendication 2, dans lequel ladite approximation linéaire est basée sur la formule suivante :

$$y = (a + \alpha)\, k + b + \beta$$

y, a, k, b et β étant tels que définis dans la revendication 11 et α étant une constante.

**13.** Appareil selon la revendication 1, comprenant des moyens additionnels de codage aptes à répondre audit au moins un paramètre de commande additionnelle ($Q_3$, $Q_4$) en plus desdits premiers, seconds, et troisièmes moyens de codage; et des moyens de comparaison et de sélection pour comparer les quantités de données codées par lesdits premiers et seconds moyens de codage et lesdits moyens additionnels de codage et sélectionner, à partir de ces quantités, deux quantités de données les plus proches au-dessus et au-dessous de ladite quantité prédéterminée, et sélectionner les paramètres de commande correspondants pour les introduire dans lesdits moyens de détermination, respectivement en tant que lesdites seconde et troisième quantités de données et en tant que lesdits second et troisième paramètres de commande.

**14.** Appareil selon la revendication 13, comprenant des moyens de mémoire conservant des valeurs de paramètres équidistantes pour leur utilisation en tant que lesdits paramètres de commande desdits seconds et troisièmes moyens de codage et desdits moyens additionnels de codage.

**15.** Appareil selon la revendication 13, comprenant des moyens de mémoire conservant des valeurs de paramètres d'intervalles proportionnées, pour leur utilisation en tant que lesdits paramètres de commande desdits seconds et troisièmes moyens de codage et desdits moyens additionnels de codage, les intervalles entre lesdites valeurs de paramètres augmentant proportionnellement à la valeur du paramètre.

**16.** Appareil selon la revendication 1, comprenant des moyens de mémoire conservant des paramètres pour leur utilisation en tant que lesdits seconds et troisièmes paramètres de commande.

**17.** Appareil selon les revendications 4 et 16 combinées, dans lequel lesdits moyens de mémoire conservent également des paramètres maximum et minimum implicites ($Q_{max}$, $Q_n$) pour leur utilisation en tant que ledit premier paramètre de commande; des moyens de comparaison pour comparer lesdites seconde et troisième quantités de données à ladite quantité prédéterminée; et des moyens de sélection pour sélectionner ledit paramètre maximum ou minimum implicite en tant que ledit premier paramètre de commande lorsque ladite seconde quantité de données dépasse ladite quantité prédéterminée ou que ladite quantité prédéterminée dépasse ladite première quantité de données.

**18.** Appareil selon la revendication 1, dans lequel lesdits seconds et troisièmes moyens de codage exécutent des opérations de codage complet pour produire lesdites seconde et troisième quantités de données d'images codées.

**19.** Procédé pour coder des données reçues représentant une image, dans lequel une première quantité ($B_0$') de données d'images codées est produite par des premiers moyens de codage (7) en réponse à un premier paramètre de commande ($Q_0$) et le premier paramètre de commande est adapté de telle sorte que ladite première quantité ($B_0$') ne dépasse pas une quantité prédéterminée ($B_0$), lequel procédé est caractérisé par :

la production d'une seconde quantité ($B_1$) de données d'image codées à partir des données reçues par commande de seconds moyens de codage (3) en utilisant un second paramètre de commande ($Q_1$);
la production d'une troisième quantité ($B_2$) de données d'image codées à partir des données reçues par commande de troisièmes moyens de codage (4), en parallèle avec lesdits seconds moyens de codage (3), en utilisant un troisième paramètre de commande ($Q_2$) différent dudit second paramètre de commande; et
la détermination dudit premier paramètre de commande ($Q_0$) à partir desdites seconde et troisième quantités de données ($B_1$, $B_2$), desdits second et troisième paramètres de commande ($Q_1$, $Q_2$), et de ladite quantité prédéterminée de données ($B_0$) en tant que base pour l'approximation.

FIG. 1

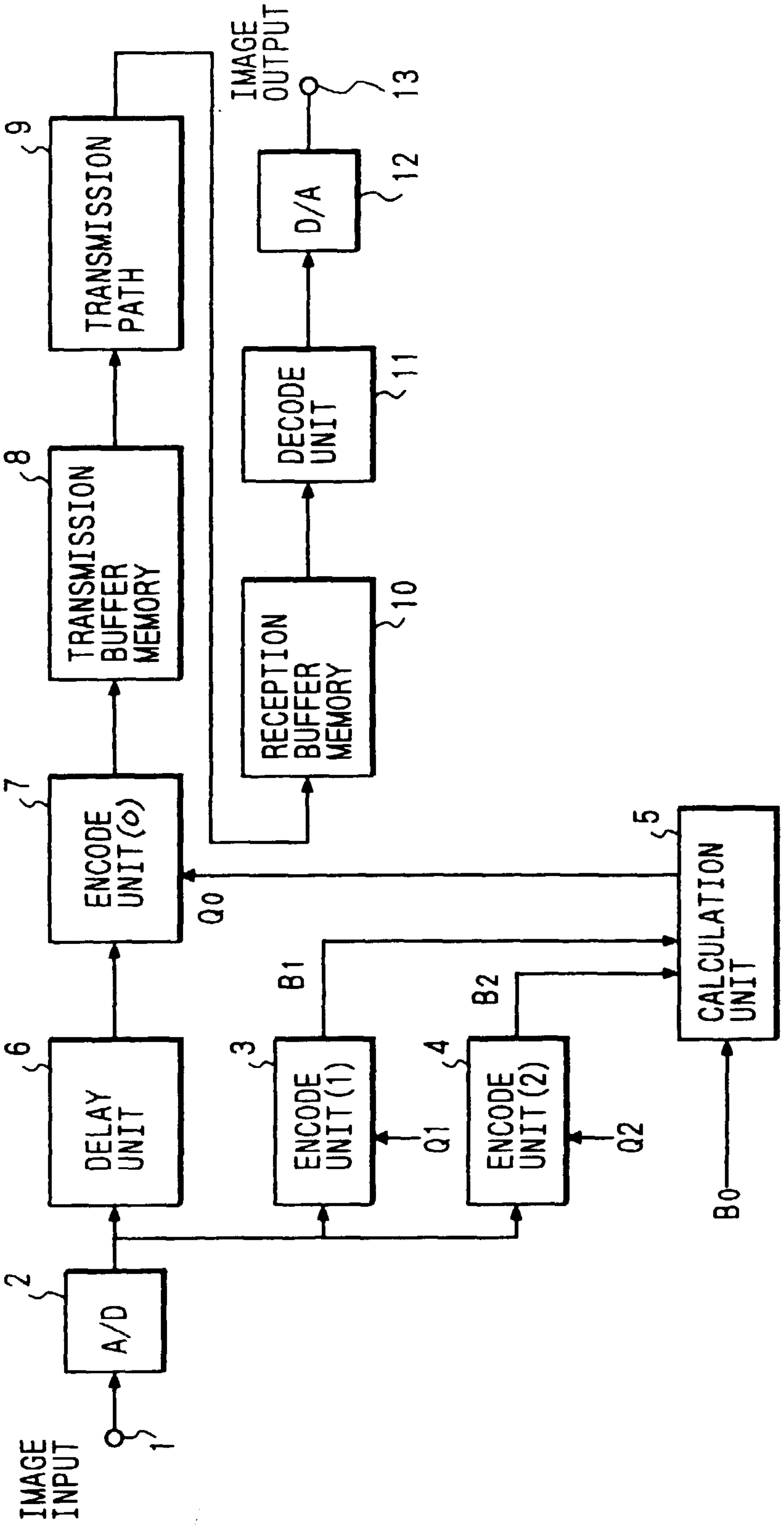
IMAGE INPUT
1
A/D
2
DELAY UNIT
6
ENCODE UNIT (0)
7
TRANSMISSION BUFFER MEMORY
8
TRANSMISSION PATH
9
ENCODE UNIT (1)
3
Q1
B1
ENCODE UNIT (2)
4
Q2
B2
Q0
CALCULATION UNIT
5
B0
RECEPTION BUFFER MEMORY
10
DECODE UNIT
11
D/A
12
IMAGE OUTPUT
13

FIG. 2

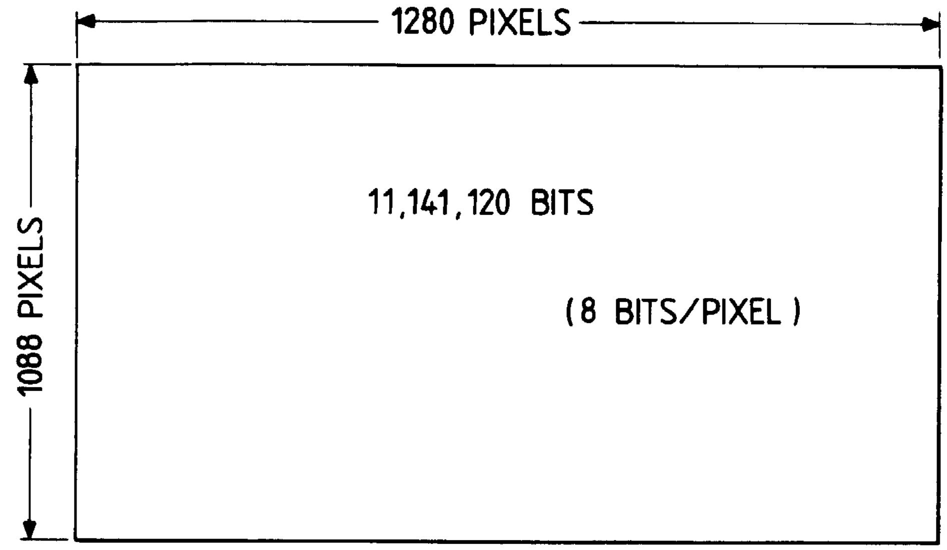
1280 PIXELS
1088 PIXELS
11,141,120 BITS
(8 BITS/PIXEL)

FIG. 3

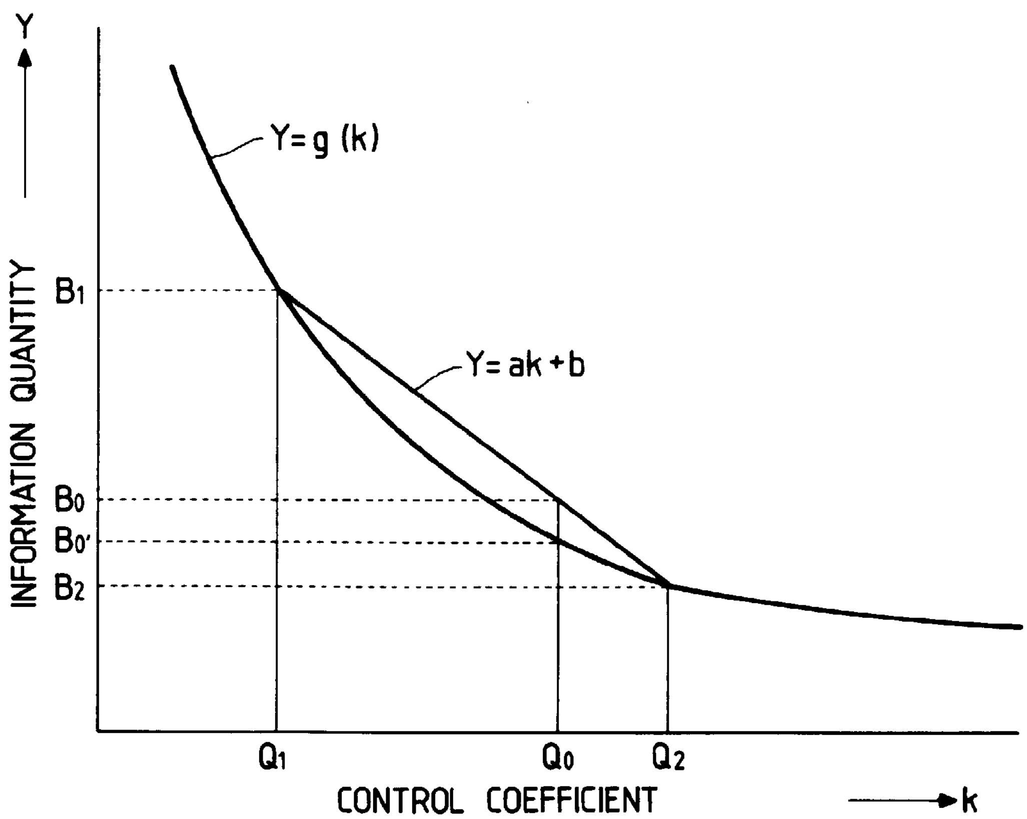
Y
INFORMATION QUANTITY
Y=g (k)
Y= ak+b
B1
B0
B0'
B2
Q1
Q0
Q2
CONTROL COEFFICIENT
k

FIG. 4

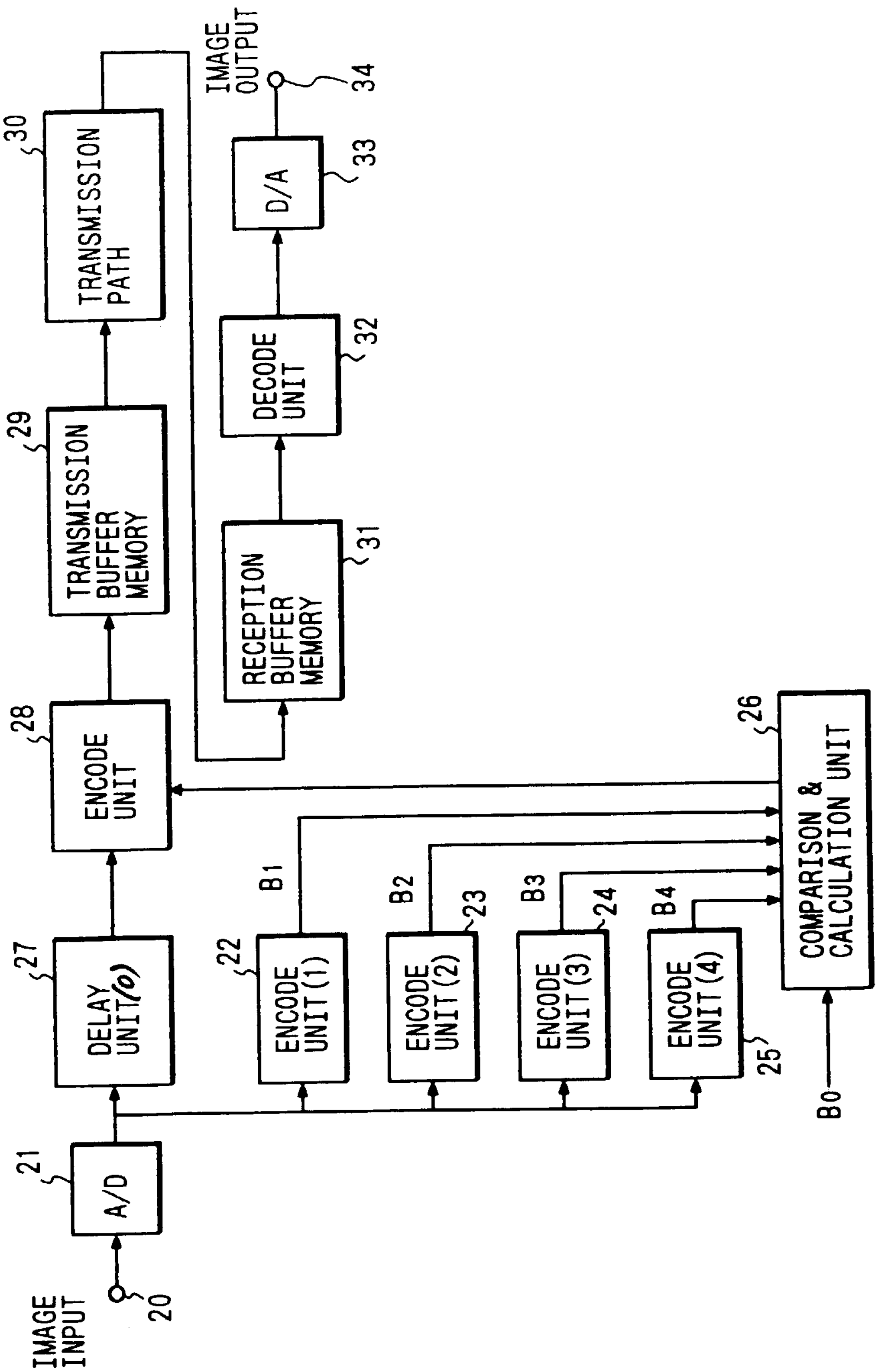
IMAGE INPUT
20
A/D
21
DELAY UNIT(0)
27
ENCODE UNIT
28
TRANSMISSION BUFFER MEMORY
29
TRANSMISSION PATH
30
RECEPTION BUFFER MEMORY
31
DECODE UNIT
32
D/A
33
IMAGE OUTPUT
34
ENCODE UNIT (1)
22
ENCODE UNIT (2)
23
ENCODE UNIT (3)
24
ENCODE UNIT (4)
25
B1
B2
B3
B4
COMPARISON & CALCULATION UNIT
26
B0

FIG. 5

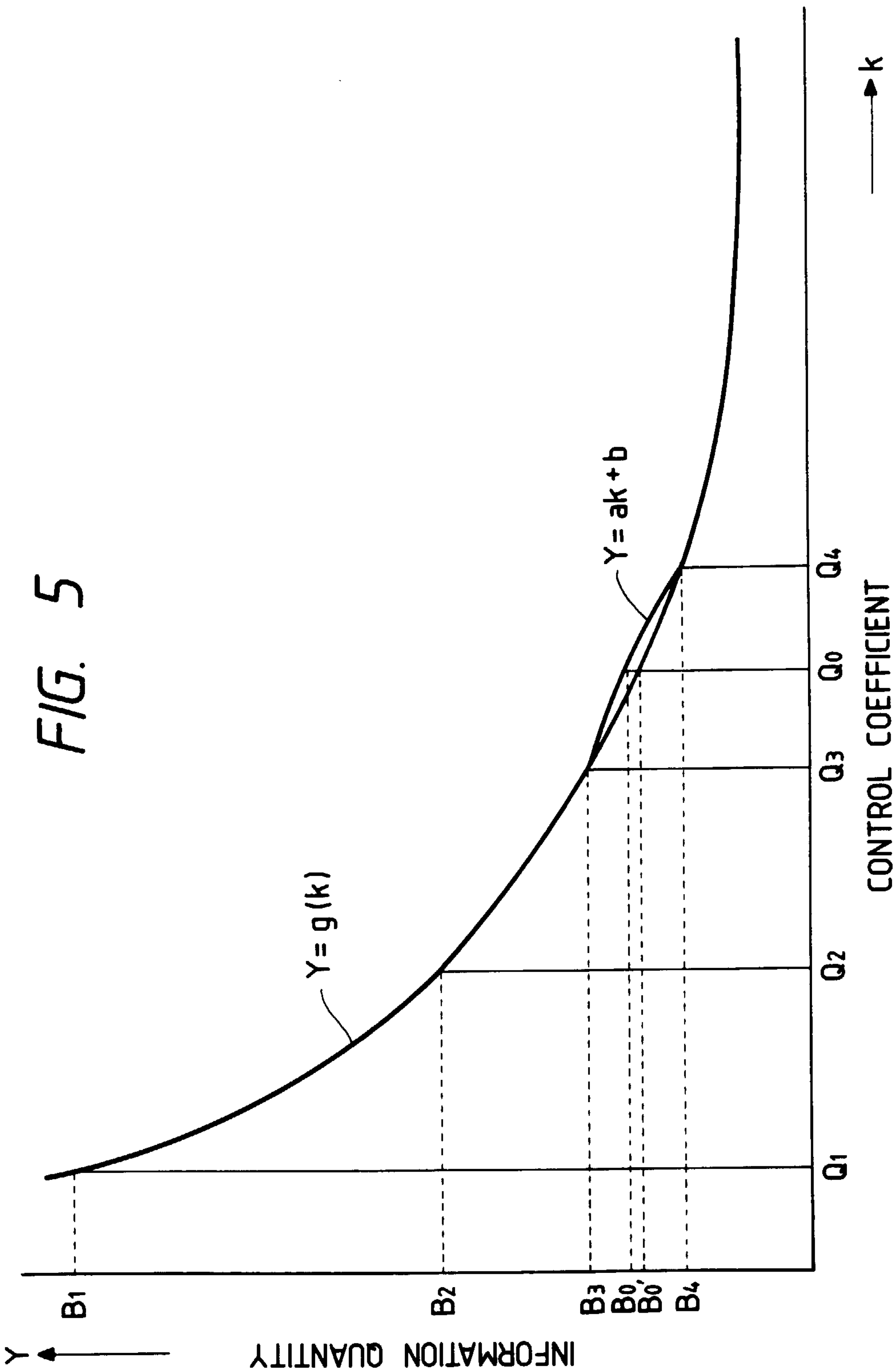
Y = g(k)
Y = ak + b
Y
INFORMATION QUANTITY
B1
B2
B3
B0'
B0
B4
Q1
Q2
Q3
Q0
Q4
CONTROL COEFFICIENT
k

FIG. 6

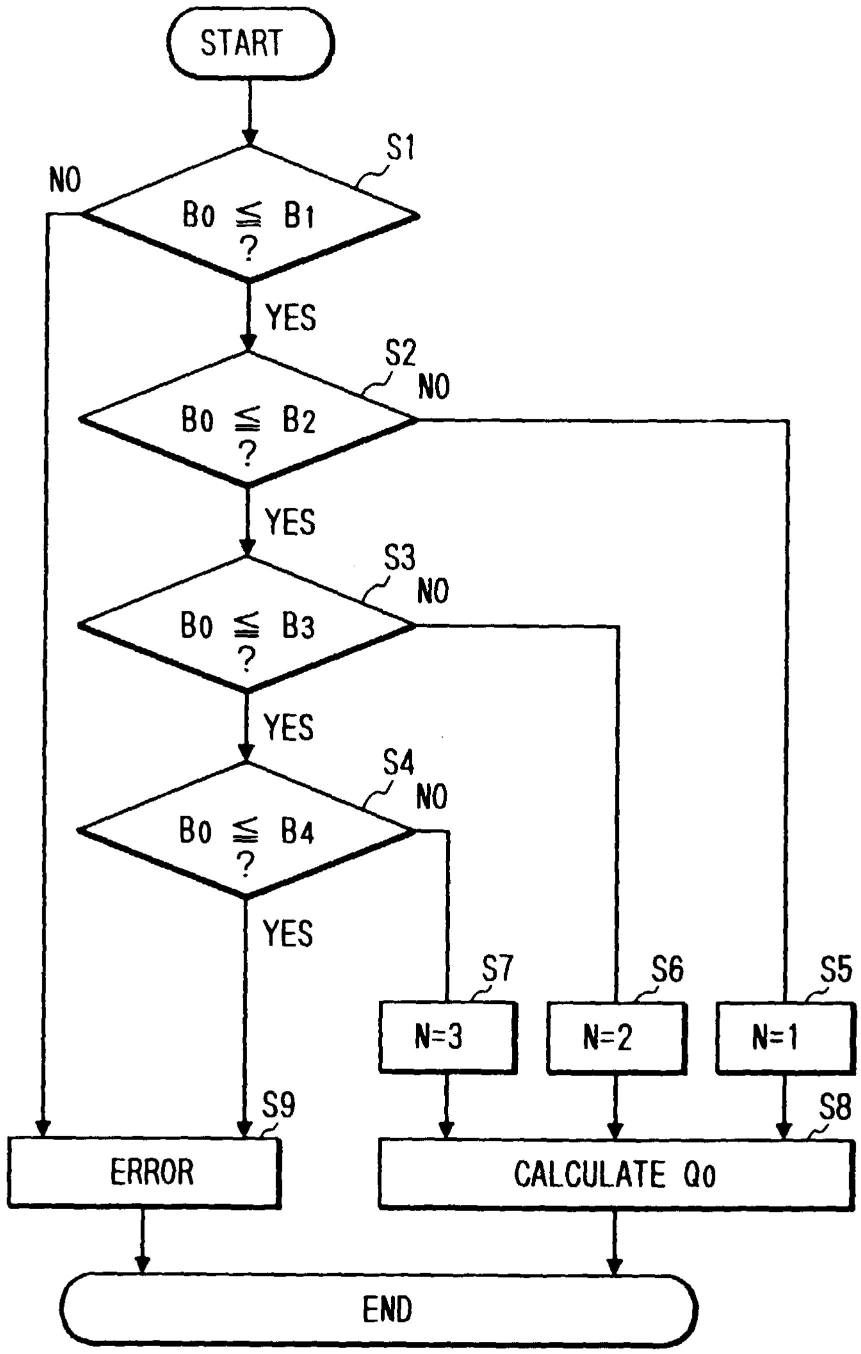
START
S1
NO
B0 ≦ B1 ?
YES
S2
NO
B0 ≦ B2 ?
YES
S3
NO
B0 ≦ B3 ?
YES
S4
NO
B0 ≦ B4 ?
YES
S7
S6
S5
N=3
N=2
N=1
S9
S8
ERROR
CALCULATE Q0
END

FIG. 7

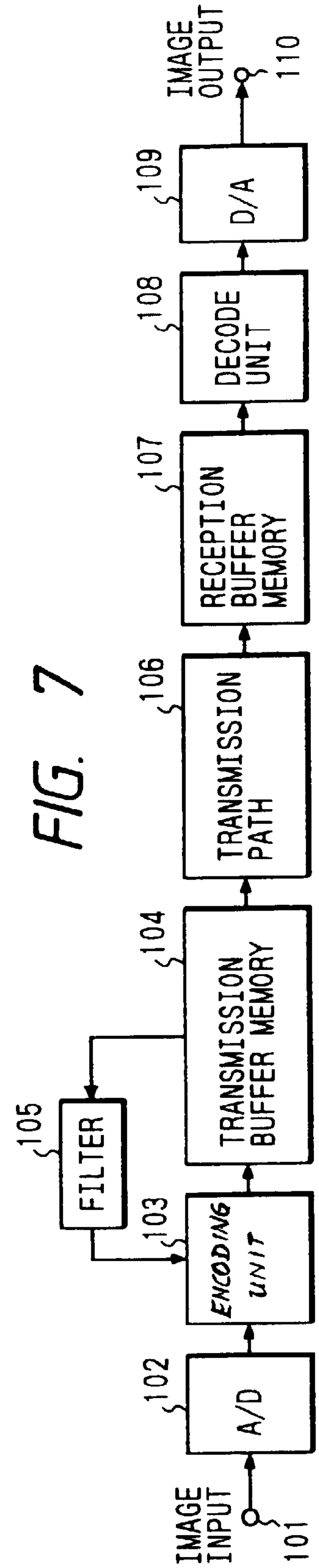
IMAGE INPUT
101
A/D
102
ENCODING UNIT
103
FILTER
105
TRANSMISSION BUFFER MEMORY
104
TRANSMISSION PATH
106
RECEPTION BUFFER MEMORY
107
DECODE UNIT
108
D/A
109
IMAGE OUTPUT
110

FIG. 8

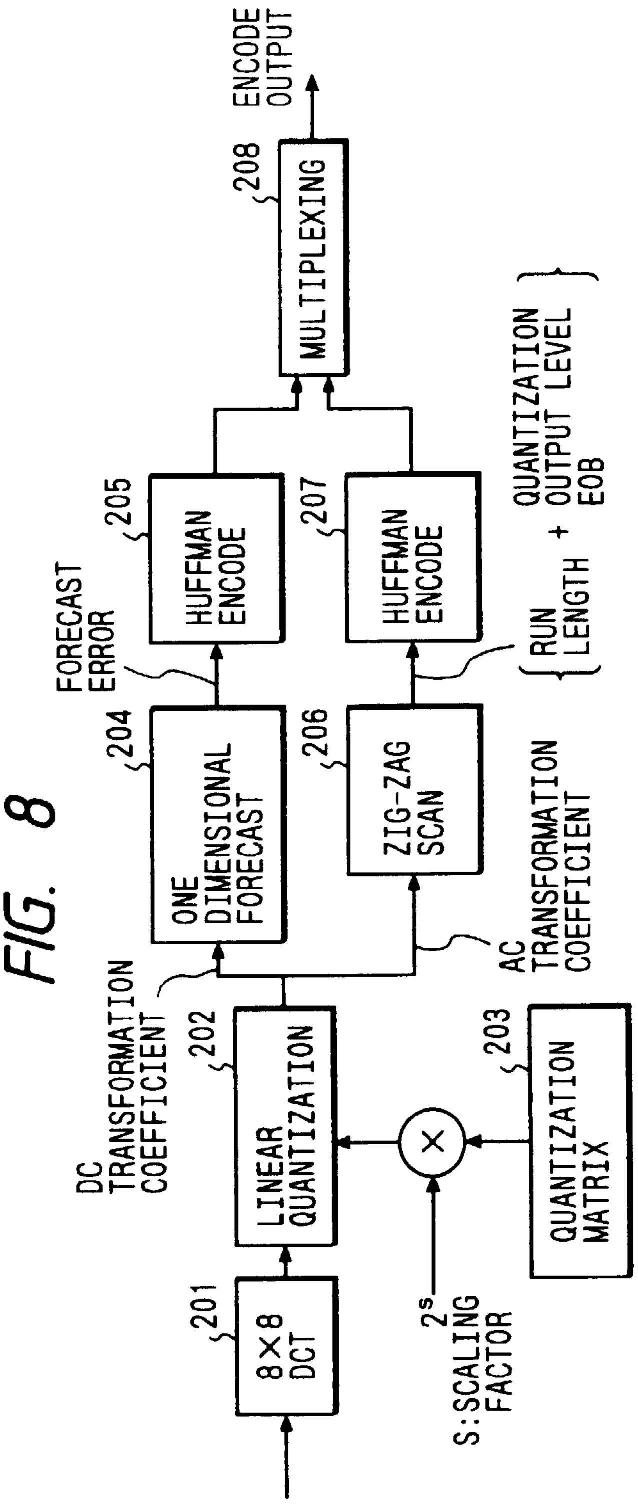
8×8 DCT
201
LINEAR QUANTIZATION
202
QUANTIZATION MATRIX
203
$2^S$
S: SCALING FACTOR
DC TRANSFORMATION COEFFICIENT
AC TRANSFORMATION COEFFICIENT
ONE DIMENSIONAL FORECAST
204
FORECAST ERROR
HUFFMAN ENCODE
205
ZIG-ZAG SCAN
206
RUN LENGTH
+
QUANTIZATION OUTPUT LEVEL EOB
HUFFMAN ENCODE
207
MULTIPLEXING
208
ENCODE OUTPUT

FIG. 9

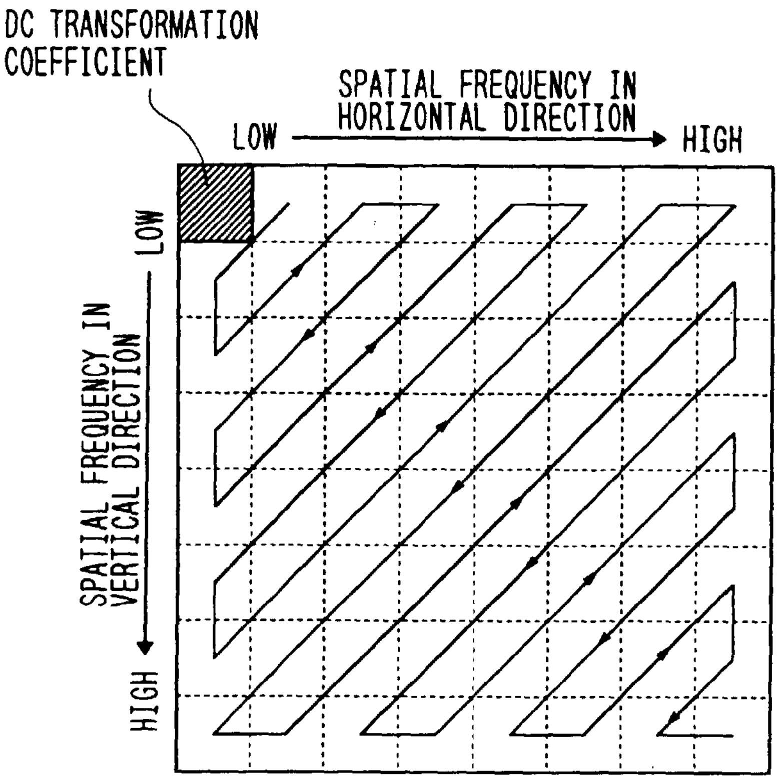
DC TRANSFORMATION COEFFICIENT
SPATIAL FREQUENCY IN HORIZONTAL DIRECTION
LOW
HIGH
SPATIAL FREQUENCY IN VERTICAL DIRECTION
LOW
HIGH

FIG. 10

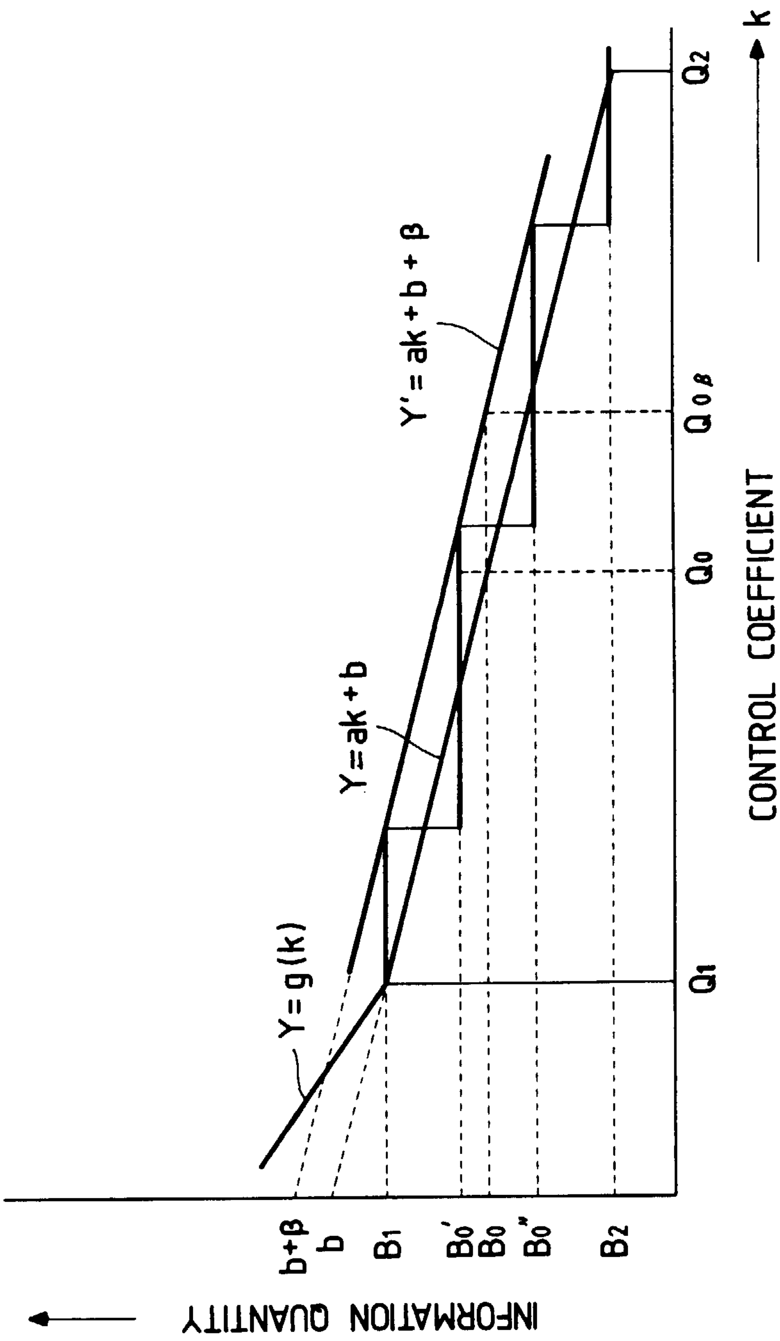
Y=g(k)
Y=ak+b
Y'=ak+b+β
b+β
b
B1
B0'
B0
B0''
B2
Q1
Q0
Q0β
Q2
CONTROL COEFFICIENT
k
INFORMATION QUANTITY

FIG. 11

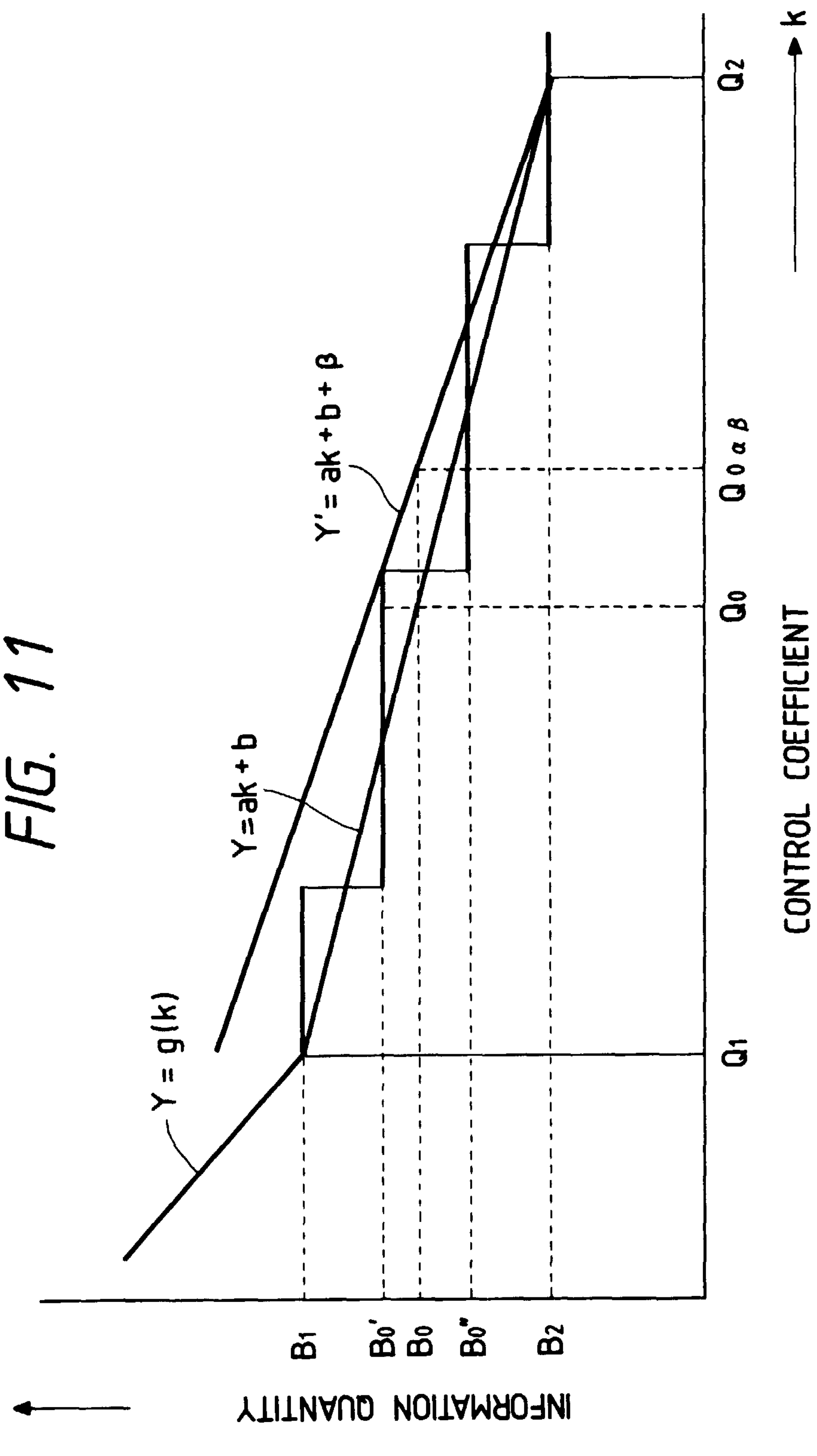
Y = g(k)
Y=ak + b
Y' = ak + b + β
B1
B0'
B0
B0"
B2
INFORMATION QUANTITY
Q1
Q0
Q0αβ
Q2
CONTROL COEFFICIENT
k

FIG. 12

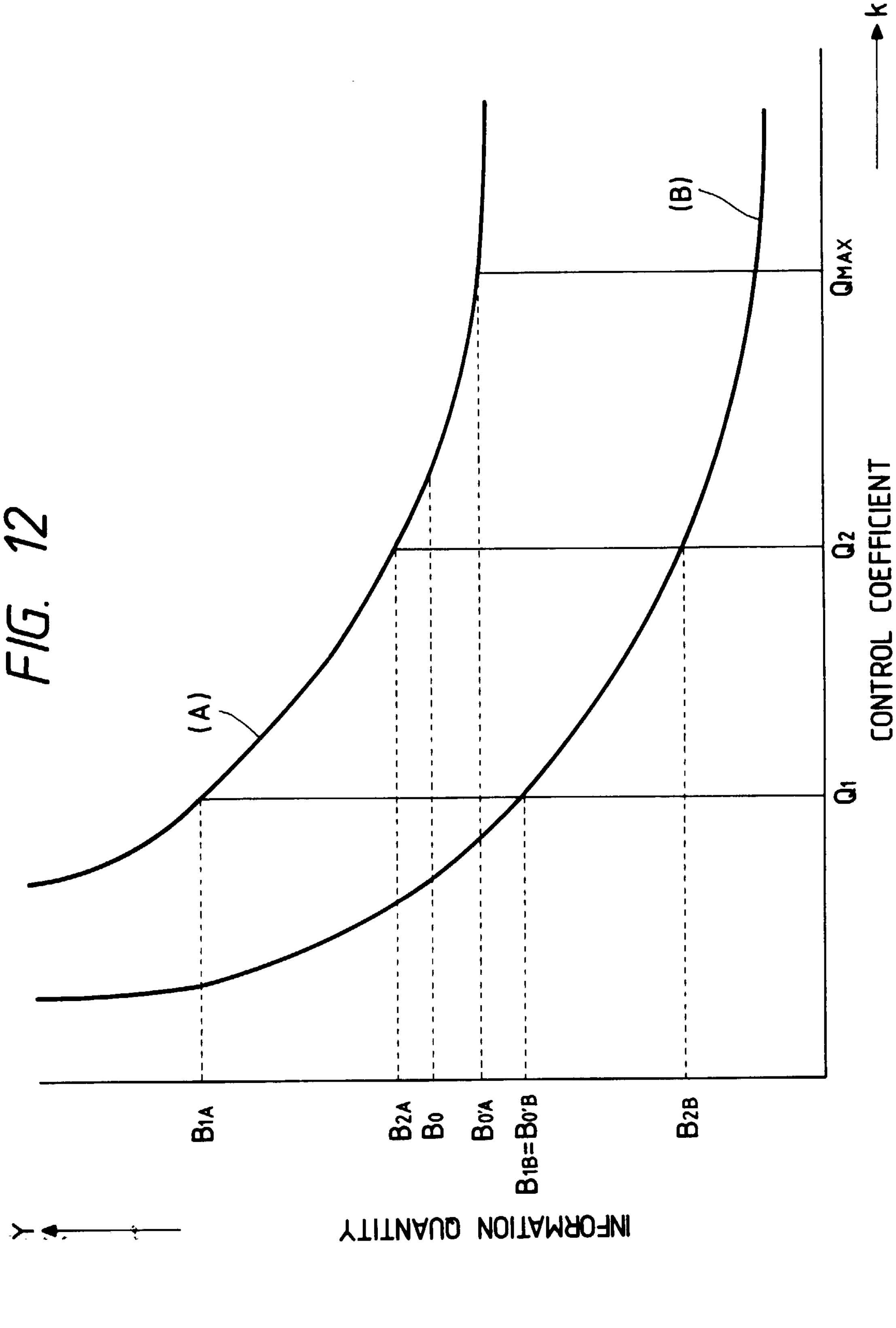
(A)
(B)
Q1
Q2
QMAX
CONTROL COEFFICIENT
k
B1A
B2A
B0
B0'A
B1B=B0'B
B2B
INFORMATION QUANTITY
Y

FIG. 13

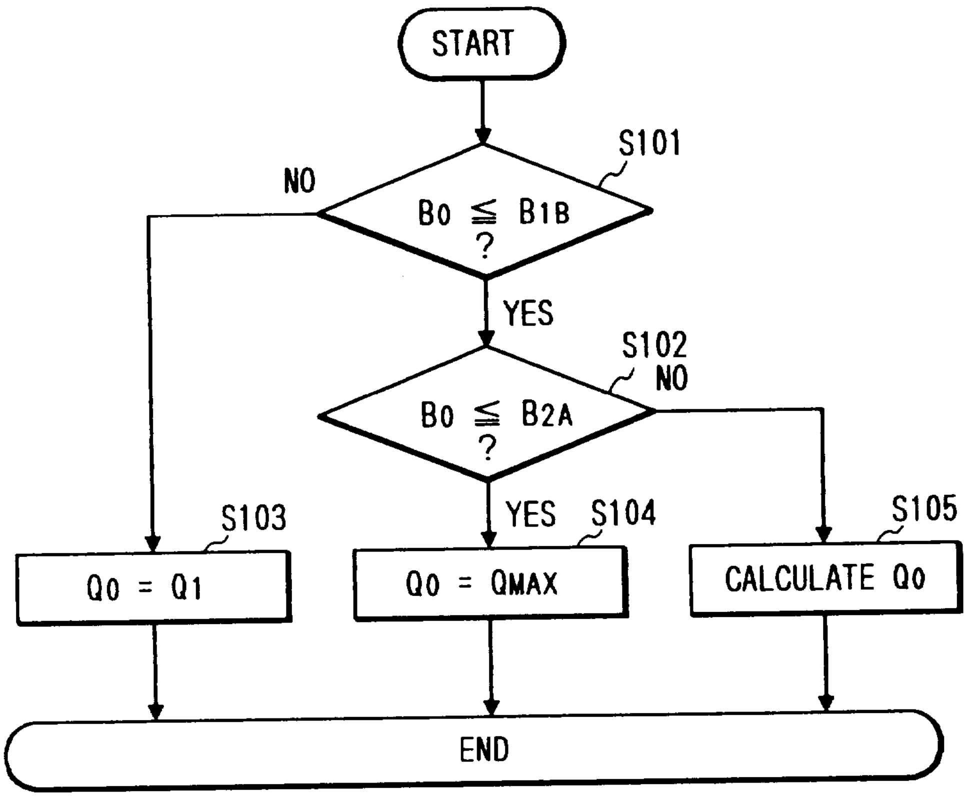
START
S101
NO
B0 ≦ B1B ?
YES
S102
NO
B0 ≦ B2A ?
S103
YES
S104
S105
Q0 = Q1
Q0 = QMAX
CALCULATE Q0
END

FIG. 14

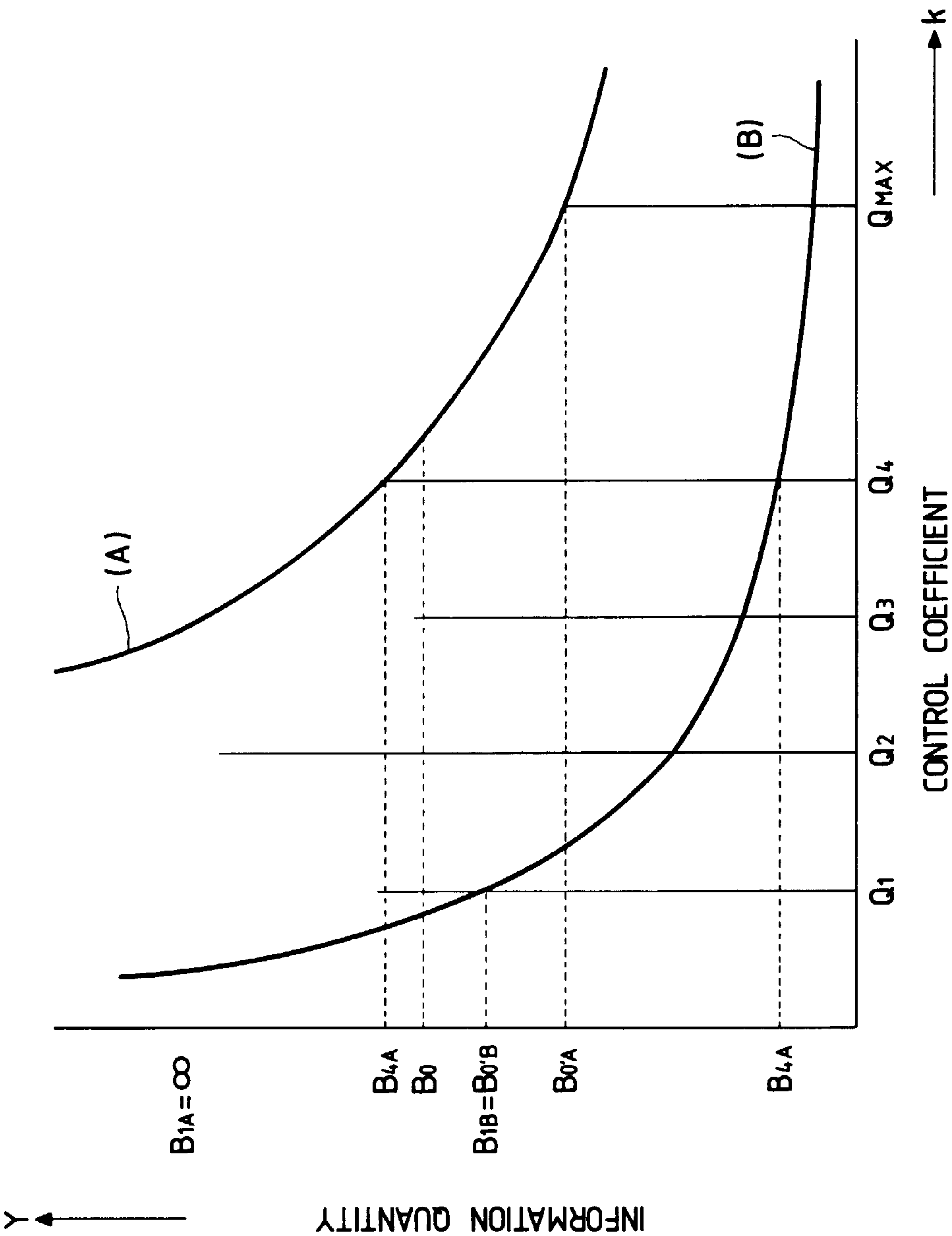
(A)
(B)
Q1
Q2
Q3
Q4
QMAX
k
CONTROL COEFFICIENT
B1A=∞
B4A
B0
B1B=B0'B
B0'A
B4A
Y
INFORMATION QUANTITY

FIG. 15

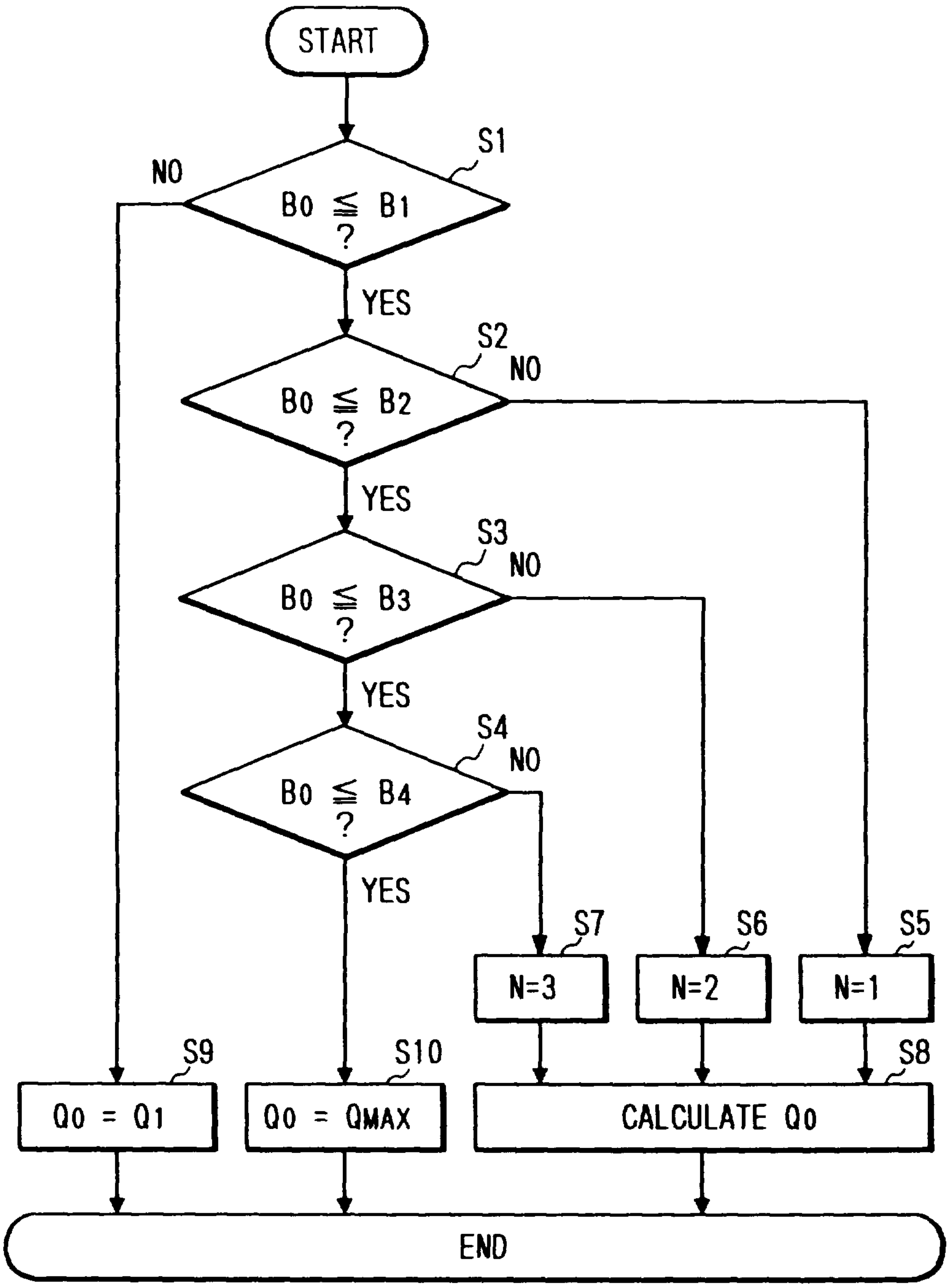
START
S1
NO
B0 ≦ B1 ?
YES
S2
NO
B0 ≦ B2 ?
YES
S3
NO
B0 ≦ B3 ?
YES
S4
NO
B0 ≦ B4 ?
YES
S7
N=3
S6
N=2
S5
N=1
S9
Q0 = Q1
S10
Q0 = QMAX
S8
CALCULATE Q0
END

FIG. 16

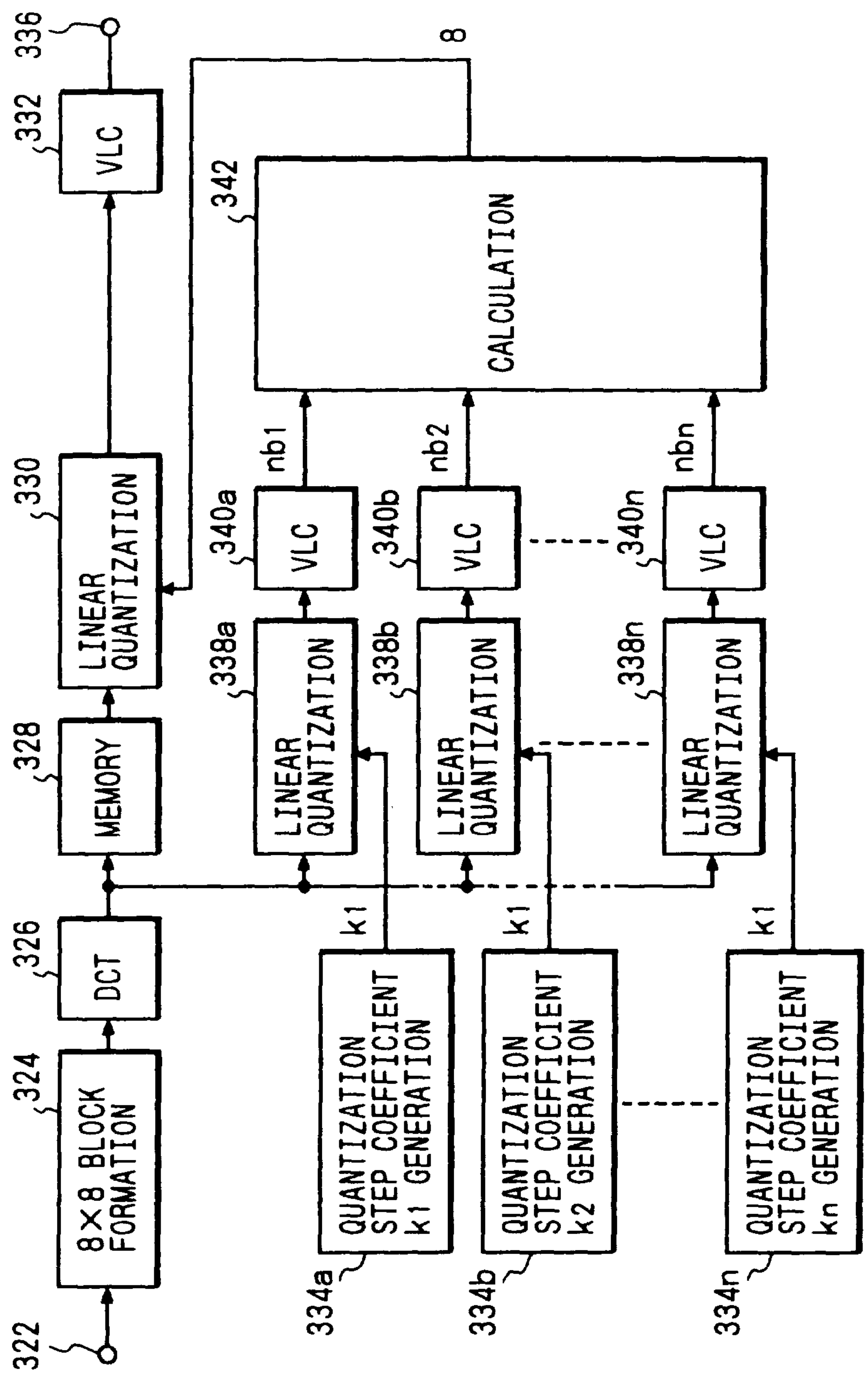
322
8×8 BLOCK FORMATION
324
DCT
326
MEMORY
328
LINEAR QUANTIZATION
330
VLC
332
336
QUANTIZATION STEP COEFFICIENT k1 GENERATION
334a
QUANTIZATION STEP COEFFICIENT k2 GENERATION
334b
QUANTIZATION STEP COEFFICIENT kn GENERATION
334n
k1
LINEAR QUANTIZATION
338a
338b
338n
VLC
340a
340b
340n
nb1
nb2
nbn
CALCULATION
342
8

FIG. 17

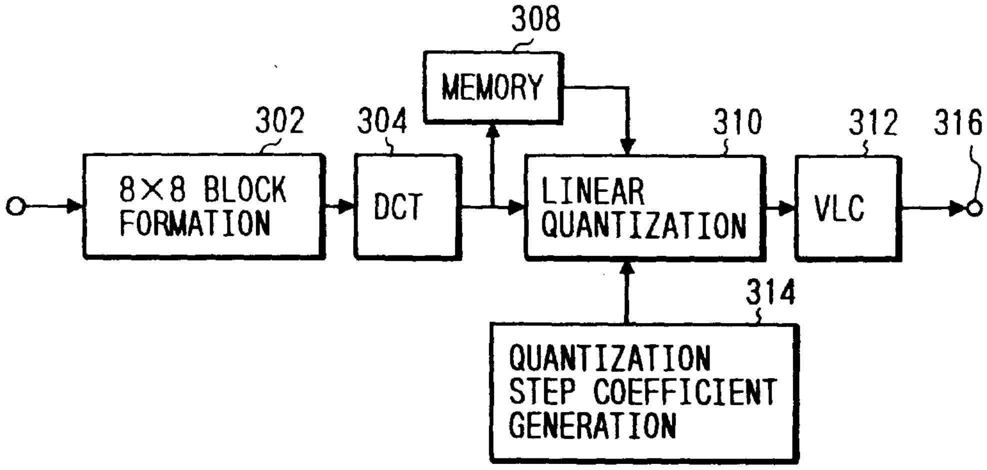
308
MEMORY
302
304
310
312
316
8×8 BLOCK FORMATION
DCT
LINEAR QUANTIZATION
VLC
314
QUANTIZATION STEP COEFFICIENT GENERATION

FIG. 18

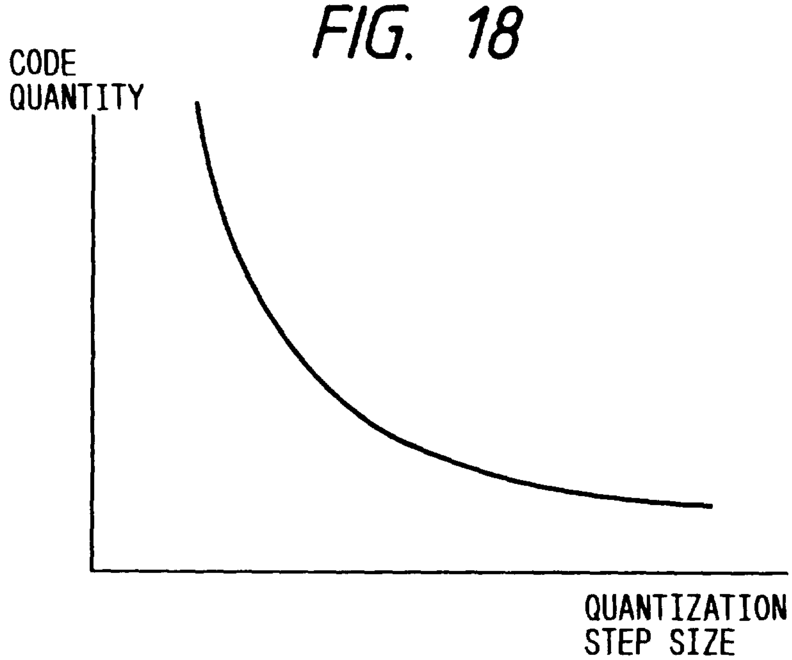
CODE QUANTITY
QUANTIZATION STEP SIZE

FIG. 19

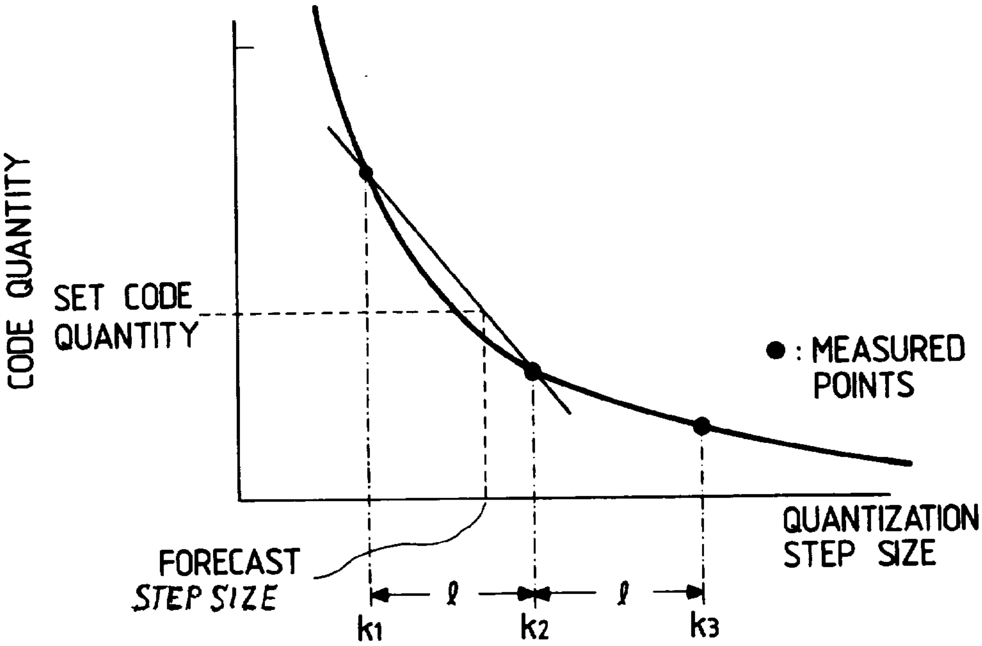
CODE QUANTITY
SET CODE QUANTITY
● : MEASURED POINTS
QUANTIZATION STEP SIZE
FORECAST STEP SIZE
ℓ
ℓ
k1
k2
k3

FIG. 20

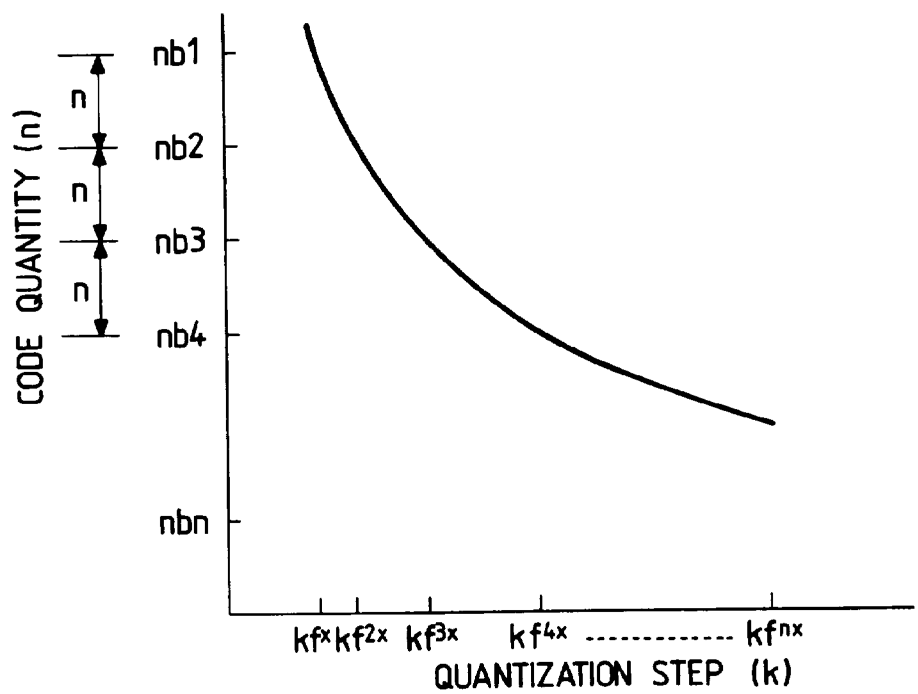
CODE QUANTITY (n)
n
n
n
nb1
nb2
nb3
nb4
nbn
kfˣ kf²ˣ kf³ˣ kf⁴ˣ ------------ kfⁿˣ
QUANTIZATION STEP (k)

FIG. 21

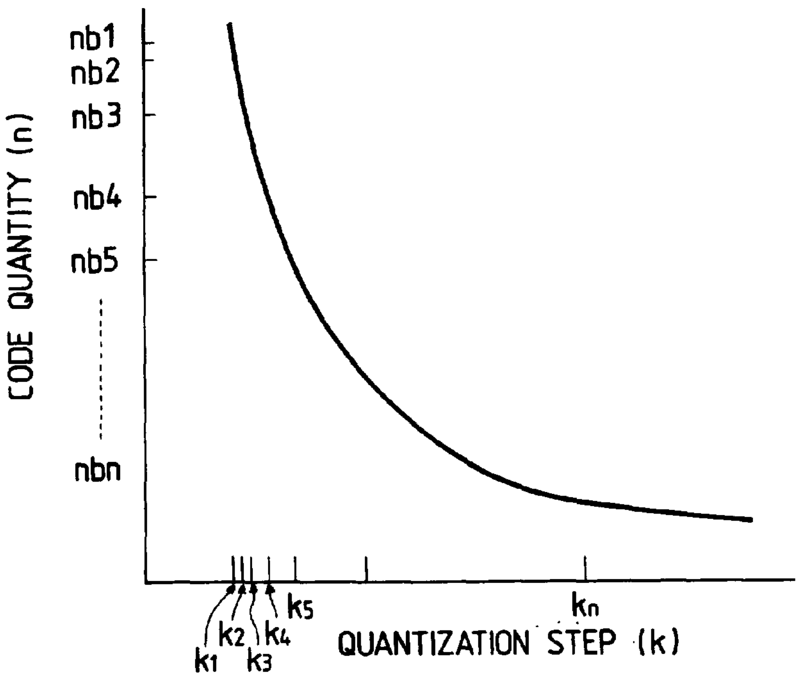
CODE QUANTITY (n)
nb1
nb2
nb3
nb4
nb5
nbn
k1
k2
k3
k4
k5
kn
QUANTIZATION STEP (k)

FIG. 22

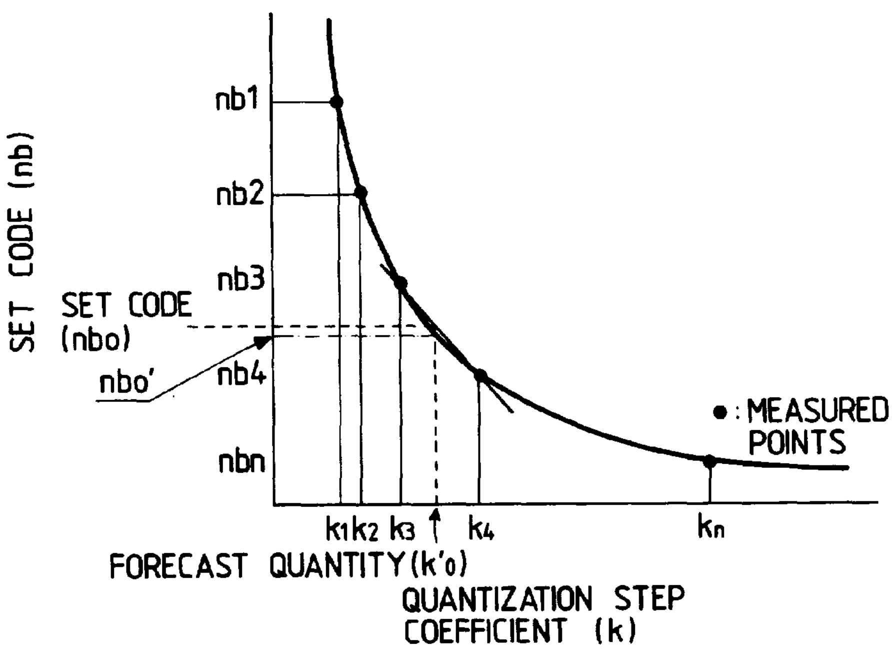
SET CODE (nb)
nb1
nb2
nb3
SET CODE (nbo)
nbo'
nb4
nbn
● : MEASURED POINTS
k1 k2 k3 k4 kn
FORECAST QUANTITY (k'o)
QUANTIZATION STEP COEFFICIENT (k)